# EUROPÄISCHE PATENTSCHRIFT

(11) **EP 2 178 938 B1**
(45) Veröffentlichungstag und Bekanntmachung des Hinweises auf die Patenterteilung: **11.09.2013**
(21) Anmeldenummer: 08786182.9
(22) Anmeldetag: 16.07.2008
(51) Int. Cl.: C08G 18/10, C09J 175/04, C08J 9/30

(54) **HITZEHÄRTENDER SCHAUM**
FOAM CURABLE BY HEAT
MOUSSE THERMODURCISSABLE

(30) Priorität: 16.07.2007 EP 07112502
(43) Veröffentlichungstag der Anmeldung: 28.04.2010
(73) Patentinhaber: Sika Technology AG, 6340 Baar (CH)
(72) Erfinder: LINNENBRINK, Martin, 21641 Apensen (DE); SCHULENBURG, Jan Olaf, CH-8610 Uster (CH); GUTGSELL, Michael, CH-8610 Uster (CH)
(74) Vertreter: Sika Patent Attorneys
(86) Internationale Anmeldenummer: PCT/EP2008/059288
(87) Internationale Veröffentlichungsnummer: WO 2009/010526

(56) Entgegenhaltungen:
- WO-A-00/39178
- NL-A- 9 000 370
- US-A- 3 849 156
- US-A- 3 862 879
- US-A1- 2005 282 989

## Beschreibung

### Technisches Gebiet

Die Erfindung betrifft das Gebiet der hitzehärtenden Schäume, welche als Klebstoffe, Dichtstoffe oder zur Herstellung von Beschichtungen eingesetzt werden.

### Stand der Technik

Hitzehärtende Epoxidharzzusammensetzungen enthaltend ein Reaktionsprodukt eines Isocyanatgruppen-terminierten Polyurethanpolymers mit einem Monohydroxyepoxid als Schlagzähigkeitsverbesserer sind bekannt und beispielsweise beschrieben in WO 2004/0055092 A1 und in WO 2005/007720 A1. Derartige hitzehärtende Epoxidharzzusammensetzungen eignen sich insbesondere als strukturelle Klebstoffe für Anwendungen mit sehr hohen Anforderungen an die mechanischen Eigenschaften.

Aus Gründen des geringeren Materialverbrauchs und der somit einhergehenden Kosteneinsparungen und/oder der Verringerung des Gewichts, aber auch zur Veränderung der Eigenschaften einer Zusammensetzung oder zum Füllen von Hohlräumen zur Schalldämmung oder Verstärkung, werden schon seit langem Zusammensetzungen, welche mehrheitlich als Kleb- oder Dichtstoffe verwendet werden, geschäumt. Aus denselben Gründen kann es auch von Vorteil sein, hitzehärtende Epoxidharzzusammensetzungen, wie sie vorhergehend erwähnt sind zu, schäumen.

Derartige hitzehärtende Epoxidharzzusammensetzungen sind hochviskos und werden bisher unter Einsatz von chemischen oder physikalischen Treibmitteln, welche ihre Wirkung nach der Applikation vor oder bei der Härtung der Zusammensetzung unter Temperatureinfluss entfalten, geschäumt. Der Nachteil dieser Verfahren zur Schäumung liegt darin, dass eine präzise Applikation des Schaums beinahe unmöglich ist. Die Volumenzunahme der hitzehärtenden Zusammensetzung und die Richtung, in der sich der Schaum ausdehnt, wenn er durch chemische oder physikalische Treibmittel nach der Applikation hergestellt wird, lassen sich nicht sehr genau vorhersagen. Der expandierende Schaum kann dabei beispielsweise die zu verklebenden Substrate gegeneinander verschieben oder aus Dichtungsfugen hervorquellen, so dass mangelhafte Endprodukte entstehen. Da die Expansion der Zusammensetzung mittels chemischen oder physikalischen Treibmitteln eine Erhöhung der Temperatur erfordert, setzt gleichzeitig mit der Schäumung auch die Aushärtung des hitzehärtenden Schaums ein, was wiederum ein Nachteil dieses Verfahrens ist. Dadurch kann einerseits die hitzehärtende Epoxidharzzusammensetzung ausgehärtet sein, bevor sie vollständig geschäumt ist, was beispielsweise problematisch sein kann, wenn der Schaum als Dichtstoff für Fugen verwendet werden soll und durch die mangelhafte Schäumung die Fuge nicht vollständig ausfüllt. Andererseits sind beispielsweise beim Verkleben zweier Substrate, Korrekturen wie Verschieben der bereits gefügten Substrate nach der Schäumung nicht mehr möglich, da während des Schäumungsvorgangs bereits die Aushärtung der Epoxidharzzusammensetzung eingesetzt hat. Aus dem gleichen Grund ist beispielsweise auch das so genannte Abziehen, also das Glätten von Dichtungsfugen nach der Schäumung unmöglich oder zumindest erschwert.

Ein weiterer Nachteil derartiger Schäume ist, dass der Schäumungsgrad nur sehr schwierig einzustellen ist und nicht vor der Applikation überprüft werden kann.

### Darstellung der Erfindung

Aufgabe der vorliegenden Erfindung ist es daher, einen hitzehärtenden Schaum zur Verfügung zu stellen, der die Nachteile des Stands der Technik überwindet und präzise appliziert werden kann.

Erfindungsgemäss wird dies durch die Merkmale des ersten Anspruchs erreicht. Überraschenderweise wurde gefunden, dass ein hitzehärtender Schaum, welcher bereits vor der Applikation geschäumt vorliegt, besonders geeignet für die Anwendung als Klebstoff, Dichtstoff oder zur Herstellung von Beschichtungen ist.

Der Vorteil der vorliegenden Erfindung ist unter anderem, dass das Anwendungsgebiet der hitzehärtenden Epoxidharzzusammensetzungen erweitert wird und diese nun auch grossflächig kostengünstig und gewichtseinsparend eingesetzt werden können. Ein weiterer sehr bedeutender Vorteil ist, dass der hitzehärtende Schaum sehr präzise aufgetragen werden kann und seine Form und Struktur während des Aushärtungsvorgangs im Wesentlichen beibehält. Dadurch ist es möglich auch mit hitzehärtenden Schäumen aus Epoxidharzzusammensetzungen hochpräzise Haftverbunde oder Dichtungsfugen herzustellen. Ein weiterer Vorteil der Erfindung ist, dass der Schäumungsgrad des hitzehärtenden Schaums sehr genau eingestellt werden kann und auch Schäume mit einem sehr hohen Gasanteil hergestellt werden können. Durch die genaue Einstellung des Schäumungsgrads lassen sich dadurch aus identischen hitzehärtenden Zusammensetzungen Schäume herstellen, welche unterschiedliche Eigenschaften aufweisen und für unterschiedliche Zwecke eingesetzt werden können.

Durch ein geeignetes Verfahren zur Herstellung und der unmittelbar darauf folgenden Applikation der hitzehärtenden Schäume ist es sogar möglich, dass der Gasgehalt im Schaum während des Auftragens verändert wird. Dies ist besonderes vorteilhaft, da somit insbesondere bei der maschinellen Applikation mittels Applikationsroboter nicht mehrere Anlagen im Einsatz stehen müssen und die Applikation in einem Stück also ohne Absetzen des Applikationsgeräts erfolgen kann.

Weitere Aspekte der Erfindung sind Gegenstand weiterer unabhängiger Ansprüche. Besonders bevorzugte Ausführungsformen der Erfindung sind Gegenstand der abhängigen Ansprüche.

### Wege zur Ausführung der Erfindung

Gegenstand der vorliegenden Erfindung ist einerseits ein hitzehärtender Schaum bestehend aus 10 bis 80 Vol.-% mindestens eines Gases und einer hitzehärtenden Zusammensetzung Z enthaltend mindestens ein Polyurethanpolymer der Formel (I) sowie mindestens einen Härter B, welcher durch erhöhte Temperatur aktiviert wird.

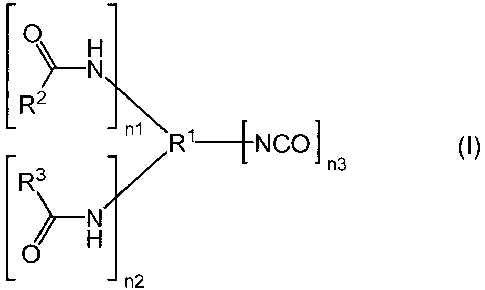

Unter dem Begriff "Schaum" wird im vorliegenden Dokument ein Gebilde aus gasgefüllten, kugel- oder polyederförmigen Zellen, welche durch flüssige, halbflüssige, hochviskose oder feste Zellstege begrenzt sind, verstanden.

Mit "Poly" beginnende Substanznamen wie Polyol oder Polyisocyanat bezeichnen im vorliegenden Dokument Substanzen, die formal zwei oder mehr der in ihrem Namen vorkommenden funktionellen Gruppen pro Molekül enthalten.

Der Begriff "Polymer" umfasst im vorliegenden Dokument einerseits ein Kollektiv von chemisch einheitlichen, sich aber in Bezug auf Polymerisationsgrad, Molmasse und Kettenlänge unterscheidenden Makromolekülen, das durch eine Polyreaktion (Polymerisation, Polyaddition, Polykondensation) hergestellt wurde. Der Begriff umfasst andererseits auch Derivate eines solchen Kollektivs von Makromolekülen aus Polyreaktionen, Verbindungen also, die durch Umsetzungen, wie beispielsweise Additionen oder Substitutionen, von funktionellen Gruppen an vorgegebenen Makromolekülen erhalten wurden und die chemisch einheitlich oder chemisch uneinheitlich sein können. Der Begriff umfasst weiterhin auch so genannte Prepolymere, das heisst reaktive oligomere Voraddukte, deren funktionelle Gruppen am Aufbau von Makromolekülen beteiligt sind.

Der Begriff "Polyurethanpolymer" umfasst sämtliche Polymere, welche nach dem so genannten Diisocyanat-Polyadditions-Verfahren hergestellt werden. Dies schliesst auch solche Polymere ein, die nahezu oder gänzlich frei sind von Urethangruppen. Beispiele für Polyurethanpolymere sind Polyether-Polyurethane, Polyester-Polyurethane, Polyether-Polyharnstoffe, Polyharnstoffe, Polyester-Polyharnstoffe, Polyisocyanurate und Polycarbodiimide.

Im Polyurethanpolymer der Formel (I) steht R¹ für ein mit n1+n2+n3 Isocyanatgruppen terminiertes lineares oder verzweigtes Polyurethanpolymer **PU1** nach dem Entfernen aller endständigen Isocyanatgruppen.

Der, bzw. die Reste R² stehen unabhängig voneinander für eine Blockierungsgruppe, welche sich bei einer Temperatur über 100°C abspaltet, oder für eine Gruppe der Formel (II).

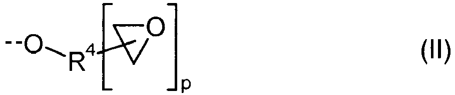

Der, bzw. die Reste R³ stehen unabhängig voneinander für eine Blockierungsgruppe, welche sich bei einer Temperatur über 100°C abspaltet, oder für eine Gruppe der Formel (II').

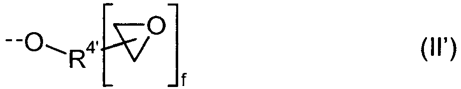

Dabei stehen die Reste R⁴ und R^{4'} je für einen aliphatischen, cycloaliphatischen, aromatischen oder arylaliphatischen (p+1)- bzw. (f+1)-wertigen Kohlenwasserstoffrest, welcher gegebenenfalls Heteroatome enthält.

p und f stehen unabhängig voneinander für einen Wert von 1, 2 oder 3.

n1, n2 und n3 stehen je für Werte zwischen 0 und 7 mit der Massgabe, dass 2 ≤ (n1+n2+n3) ≤ 8 ist.

Die möglichen Blockierungsgruppen R² und R³ sind grundsätzlich sehr vielfältig und der Fachmann kennt eine breite Anzahl derartiger Blockierungsgruppen, zum Beispiel aus den Artikeln von Douglas A. Wick in Progress in Organic Coatings 36 (1999), 148-172 und in Progress in Organic Coatings 41 (2001), 1-83.

Als Reste R² und/oder R³ stehen insbesondere Reste, welche ausgewählt sind aus der Gruppe bestehend aus

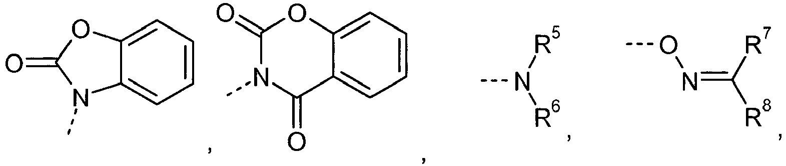

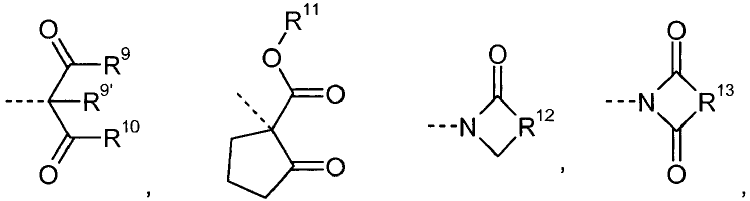

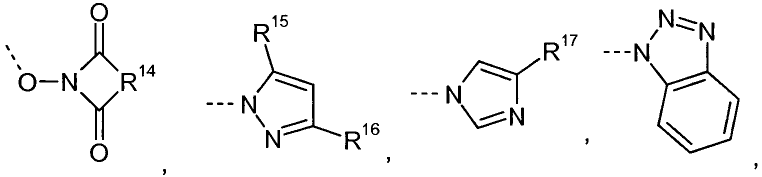

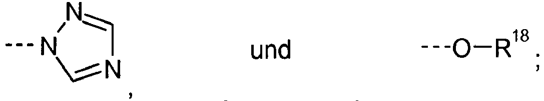

Hierbei stehen R⁵, R⁶, R⁷ und R⁸ je unabhängig voneinander für eine Alkyl- oder Cycloalkyl- oder Aryl- oder Arylalkyl - oder Alkylarylgruppe. Ebenfalls kann R⁵ zusammen mit R⁶, oder R⁷ zusammen mit R⁸, einen Teil eines 4- bis 7- gliedrigen Rings bilden, welcher gegebenenfalls substituiert ist.

R⁹, R^{9'} und R¹⁰ stehen je unabhängig voneinander für eine Alkyl- oder Aryl- oder Arylalkyl- oder Alkylarylgruppe oder für eine Alkyloxy- oder Aryloxy-oder Arylalkyloxygruppe und R¹¹ steht für eine Alkylgruppe.

Weiterhin stehen R¹² , R¹³ und R¹⁴ je unabhängig voneinander für eine Alkylengruppe mit 2 bis 5 C-Atomen, welche gegebenenfalls Doppelbindungen aufweist oder substituiert ist, oder für eine Phenylengruppe oder für eine hydrierte Phenylengruppe.

R¹⁵, R¹⁶ und R¹⁷ stehen je unabhängig voneinander für H oder für eine Alkyl- oder Aryl- oder Arylalkylgruppe und R¹⁸ steht für eine Arylalkylgruppe oder für eine ein- oder mehrkernige substituierte oder unsubstituierte Aromatengruppe, welche gegebenenfalls aromatische Hydroxylgruppen aufweist.

Selbstverständlich ist dem Fachmann klar, dass sämtliche der vorgenannten Substituenten keine Hydroxylgruppen, keine primären oder sekundären Aminogruppen, keine Mercaptogruppen, keine Harnstoffgruppen und keine anderen Gruppen mit aktivem Wasserstoff enthalten dürfen, wenn das Polyurethanpolymer der Formel (I) freie Isocyanatgruppen aufweist, das heisst, wenn im Polyurethanpolymer der Formel (I) n3 # 0 ist.

Der Härter **B** wird durch erhöhte Temperatur aktiviert. Es handelt sich hierbei vorzugsweise um einen Härter, welcher ausgewählt ist aus der Gruppe bestehend aus Dicyandiamid, Guanamine, Guanidine, Aminoguanidine und deren Derivate. Weiterhin möglich sind beschleunigend wirksame Härter, wie substituierte Harnstoffe, wie beispielsweise 3-(3-Chlor-4-methylphenyl)-1,1-dimethylharnstoff (Chlortoluron), oder Phenyl-Dimethylharnstoffe, insbesondere p-Chlorphenyl-N,N-dimethylharnstoff (Monuron), 3-Phenyl-1,1-dimethylharnstoff (Fenuron) oder 3,4-Dichlorphenyl-N,N-dimethylharnstoff (Diuron). Weiterhin können Verbindungen der Klasse der Imidazole und Amin-Komplexe eingesetzt werden.

Bevorzugt handelt es sich beim Härter **B** um einen Härter, der ausgewählt ist aus der Gruppe bestehend aus Dicyandiamid, Guanamine, Guanidine, Aminoguanidine und deren Derivate; substituierte Harnstoffe, insbesondere 3-(3-Chlor-4-methylphenyl)-1,1-dimethylharnstoff (Chlortoluron), oder Phenyl-Di-methylharnstoffe, insbesondere p-Chlorphenyl-N,N-dimethylharnstoff (Monuron), 3-Phenyl-1,1-dimethylharnstoff (Fenuron), 3,4-Dichlorphenyl-N,N-dimethylharnstoff (Diuron), sowie Imidazole und Amin-Komplexe.

Besonders bevorzugt als Härter **B** ist Dicyandiamid. Weist das Polyurethanpolymer der Formel (I) sowohl Epoxid- als auch Isocyanatgruppen auf, ist der Härter **B** bevorzugt ein Imidoamin, meist bevorzugt ein Imid eines Polyalkylenpolyamins, insbesondere ein Monoimid eines Polyalkylenpolyamins.

Ist im Polyurethan der Formel (I) n3 ≥ 2 und ist dem entsprechend 2 ≤ n3 ≤ 8, handelt es sich beim Härter **B** um einen Härter für Isocyanate. Die Blockierung eines derartigen Härters **B** kann dabei von chemischer oder physikalischer Natur sein. Beispiele für geeignete chemisch blockierte Härter sind über eine Komplexbindung an Metalle gebundene Polyamine, insbesondere Komplexverbindungen von Methylendianilin (MDA) und Natriumchlorid. Solche Komplexverbindungen werden üblicherweise mit der Bruttoformel (MDA)₃·NaCl beschrieben. Ein geeigneter Typ ist als Dispersion in Diethylhexylphthalat unter dem Handelsnamen Caytur^{®} 21 von Chemtura Corp., USA, erhältlich. Der Komplex zersetzt sich beim Erwärmen auf 80 bis 160 °C mit bei höherer Temperatur zunehmender Geschwindigkeit, wodurch Methylendianilin als aktiver Härter freigesetzt wird. Beispiele für physikalisch blockierte Härter sind mikroverkapselte Härter. Zur Verwendung als Härter in mikroverkapselter Form insbesondere geeignet sind zwei- oder mehrwertige Alkohole wie 1,2-Ethandiol, 1,2- und 1,3-Propandiol, Neopentylglykol, Diethylenglykol, Triethylenglykol, die isomeren Dipropylenglykole und Tripropylenglykole, die isomeren Butandiole, Pentandiole, Hexandiole, Heptandiole, Octandiole, Nonandiole, Decandiole, Undecandiole, 1,3- und 1,4-Cyclohexandimethanol, hydriertes Bisphenol A, dimere Fettalkohole, 1,1,1-Trimethylolethan, 1,1,1-Trimethylolpropan, Glycerin, Pentaerythrit, Zuckeralkohole, niedrigmolekulare Alkoxylierungsprodukte der vorgenannten zwei- und mehrwertigen Alkohole; kurzkettige Polyesterpolyole wie Terephthalsäurebisglykolester; aliphatische, cycloaliphatische und aromatische Aminoalkohole wie Ethanolamin, Propanolamin, Butanolamin, N-Methylethanolamin, Diethanolamin, Triethanolamin; Hydrazide von Dicarbonsäuren; aliphatische Polyamine wie Ethylendiamin, 1,2- und 1,3-Propandiamin, 2-Methyl-1,2-propandiamin, 2,2-Dimethyl-1,3-propandiamin, 1,3- und 1,4-Butandiamin, 1,3- und 1,5-Pentandiamin, 1,6-Hexamethylendiamin, 2,2,4- und 2,4,4-Trimethylhexamethylendiamin und Mischungen davon, 1,7-Heptandiamin, 1,8-Octandiamin, 4-Aminomethyl-1,8-octandiamin, 1,9-Nonandiamin, 1,10-Decandiamin, 1,11-Undecandiamin, 1,12-Dodecandiamin, Methyl-bis-(3-aminopropyl)amin, 1,5-Diamino-2-methylpentan (MPMD), 1,3-Diaminopentan (DAMP), 2,5-Dimethyl-1,6-hexamethylendiamin, Dimerfettsäurediamine; cycloaliphatische Polyamine wie 1,2-, 1,3- und 1,4-Diaminocyclohexan, Bis-(4-aminocyclohexyl)-methan, Bis-(4-amino-3-methyl-cyclohexyl)-methan, Bis-(4-amino-3-ethylcyclohexyl)-methan, Bis-(4-amino-3,5-dimethylcyclohexyl)methan, 1-Amino-3-aminomethyl-3,5,5-trimethylcyclohexan (= Isophorondiamin oder IPDA), 2- und 4-Methyl-1,3-diaminocyclohexan und Mischungen davon, 1,3- und 1,4-Bis-(aminomethyl)cyclohexan, 1-Cyclohexyl-amino-3-aminopropan, 2,5(2,6)-Bis-(aminomethyl)-bicyclo[2.2.1]heptan (NBDA, hergestellt von Mitsui Chemicals, Japan), 3(4),8(9)-Bis-(aminomethyl)-tricyclo-[5.2.1.02,6]decan, 1,4-Diamino-2,2,6-trimethylcyclohexan (TMCDA), 3,9-Bis-(3-aminopropyl)-2,4,8,10-tetraoxaspiro[5.5]undecan, 1,3- und 1,4-Xylylendiamin; Ethergruppen-haltige aliphatische Polyamine wie Bis-(2-aminoethyl)ether, 4,7-Dioxadecan-1,10-diamin, 4,9-Dioxadodecan-1,12-diamin und höhere Oligomere davon, Polyoxyalkylen-Polyamine mit zwei oder drei Aminogruppen, erhältlich beispielsweise unter dem Namen Jeffamine® (hergestellt von Huntsman International, LLC, USA); aromatische Polyamine wie Methylendianilin, Diaminodiphenylether, Diaminodiphenylsulfon, die isomeren Phenylendiamine, Aminodiphenylamin. Bevorzugt sind die genannten aliphatischen, cycloaliphatischen und aromatischen Polyamine. Die Mikroverkapselung dieser Härter kann nach einem der gängigen Verfahren durchgeführt werden, beispielsweise mittels Sprühtrocknung, Grenzflächenpolymerisation, Koazervation, Tauch- oder Zentrifugenverfahren, Wirbelbettverfahren, Vakuum-Verkapselung oder elektrostatische Mikroverkapselung. Die so erhaltenen Mikrokapseln haben insbesondere eine Partikelgrösse von 0.1 bis 100 µm, bevorzugt 0.3 bis 50 µm. Die Grösse der Mikrokapseln ist so bemessen, dass sie sich beim Erhitzen einerseits effektiv öffnen, und andererseits nach der Aushärtung eine optimale Homogenität und damit Kohäsionsfestigkeit des Schaums erhalten wird. Sie dürfen weiterhin keinen schädlichen Einfluss auf die Adhäsionseigenschaften des Schaums ausüben. Als Material für die Kapselhülle kommen Polymere in Betracht, die im zu verkapselnden Härter unlöslich sind und einen Schmelzpunkt von 40 bis 200 °C aufweisen. Beispiele für geeignete Polymere sind Kohlenwasserstoff-Wachse, Polyethylenwachse, Wachsester, Polyester, Polyamide, Polyacrylate, Polymethacrylate oder Mischungen mehrerer solcher Polymeren.

Der Anteil des Härters **B** beträgt vorzugsweise 0.05 bis 8 Gew.-%, insbesondere 0.1 bis 6 Gew.-%, bevorzugt 0.2 bis 5 Gew.-%, bezogen auf das Gesamtgewicht des Schaums.

Der Begriff "Härter" schliesst im vorliegenden Dokument auch Katalysatoren und katalytisch wirkende Verbindungen mit ein. Dem Fachmann ist in diesem Fall klar, dass beim Einsatz eines Katalysators oder einer katalytisch wirkenden Verbindung als Härter **B,** der Anteil der Härters **B** am gesamten Schaum im unteren Bereich des angegebenen Wertebereichs liegt. Dementsprechend liegt dieser Anteil im oberen Wertebereich, d. h. typischerweise 0.5 bis 8 Gew.-%, insbesondere 1 bis 6 Gew.-%, bevorzugt 2.5 bis 5 Gew.-%, wenn es sich beim Härter **B** um einen Härter handelt, welcher in stöchiometrischem Verhältnis zu dem reaktiven Gruppen des Polyurethanpolymers der Formel (I) verbraucht wird, während dessen im Falle eines Katalysators der Anteil tiefer liegt, d.h. typischerweise 0.05 bis 2 Gew.-%, insbesondere 0.1 bis 1 Gew.-%, bevorzugt 0.2 bis 0.75 Gew.-%, jeweils bezogen auf das Gesamtgewicht des Schaums.

Das Polyurethanpolymer **PU1,** auf dem R¹ basiert, lässt sich herstellen aus mindestens einem Polyisocyanat sowie aus mindestens einem Polymer **Q_{PM}** mit endständigen Amino-, Thiol- oder Hydroxylgruppen und/oder aus einem, gegebenenfalls substituierten, Polyphenol **Q_{PP}.**

Geeignete Polyisocyanate sind insbesondere Di- und Triisocyanate.

Geeignete Diisocyanate sind aliphatische, cycloaliphatische, aromatische oder arylaliphatische Diisocyanate, insbesondere handelsübliche Produkte wie Methylendiphenyldiisocyanat (MDI), Hexamethylendiisocyanat (HDI), Toluoldiisocyanat (TDI), Tolidindiisocyanat (TODI), Isophorondiisocyanat (IPDI), Trimethylhexamethylendiisocyanat (TMDI), 2,5- oder 2,6-Bis-(iso-cyanatomethyl)-bicyclo[2.2.1]heptan, 1,5-Naphthalindiisocyanat (NDI), Dicyclo-hexylmethyldiisocyanat (H₁₂MDI), p-Phenylendiisocyanat (PPDI), m-Tetramethylxylylen diisocyanat (TMXDI), etc. sowie deren Dimere. Bevorzugt sind HDI, IPDI, MDI oder TDI.

Geeignete Triisocyanate sind Trimere, Allophanate oder Biurete von aliphatischen, cycloaliphatischen, aromatischen oder arylaliphatischen Diisocyanaten, insbesondere die lsocyanurate und Biurete der im vorherigen Absatz beschriebenen Diisocyanate.

Selbstverständlich können auch geeignete Mischungen von Di- oder Triisocyanaten eingesetzt werden.

Als Polymere **Q_{PM}** mit endständigen Amino-, Thiol- oder Hydroxylgruppen sind insbesondere geeignet Polymere **Q_{PM}** mit zwei oder drei endständigen Amino-, Thiol- oder Hydroxylgruppen.

Die Polymere **Q_{PM}** weisen vorteilhaft ein Äquivalenzgewicht von 300 bis 6000, insbesondere von 600 bis 4000, bevorzugt von 700 bis 2200 g/Äquivalent NCO-reaktiver Gruppen auf.

Als Polymere **Q_{PM}** geeignet sind Polyole, beispielsweise die folgenden handelsüblichen Polyole oder beliebige Mischungen davon:
- Polyoxyalkylenpolyole, auch Polyetherpolyole genannt, welche das Polymerisationsprodukt von Ethylenoxid, 1,2-Propylenoxid, 1,2- oder 2,3-Butylenoxid, Tetrahydrofuran oder Mischungen davon sind, gegebenenfalls polymerisiert mit Hilfe eines Startermoleküls mit zwei oder drei aktiven H-Atomen wie beispielsweise Wasser oder Verbindungen mit zwei oder drei OH-Gruppen. Die Polyoxyalkylendiole können unterschiedliche Ungesättigtheitsgrade (gemessen nach ASTM D-2849-69 und angegeben in Milliäquivalent Ungesättigtheit pro Gramm Polyol (mEq/g)) aufweisen. Jene mit einem niedrigen Ungesättigtheitsgrad werden beispielsweise mit Hilfe von so genannten Double Metal Cyanide Komplex-Katalysatoren (DMC-Katalysatoren) hergestellt, jene mit einem höheren Ungesättigtheitsgrad werden beispielsweise mit Hilfe von anionischen Katalysatoren wie NaOH, KOH, CsOH oder Alkalialkoholaten hergestellt.
   Insbesondere geeignet sind Polyoxyalkylendiole oder Polyoxyalkylentriole mit einem Ungesättigtheitsgrad tiefer als 0.02 mEq/g und mit einem Molekulargewicht im Bereich von 1'000 bis 30'000 g/mol, sowie Polyoxyethylendiole, Polyoxyethylentriole, Polyoxypropylendiole und Polyoxypropylentriole mit einem Molekulargewicht von 400 bis 8'000 g/mol. Unter "Molekulargewicht" versteht man im vorliegenden Dokument stets das Molekulargewichtsmittel Mn.
   Ebenfalls besonders geeignet sind so genannte Ethylenoxid-terminierte ("EO-endcapped", ethylene oxide endcapped) Polyoxypropylenpolyole. Letztere sind spezielle Polyoxypropylenpolyoxyethylenpolyole, die beispielsweise dadurch erhalten werden, dass reine Polyoxypropylenpolyole, insbesondere Polyoxypropylendiole und -triole, nach Abschluss der Polypropoxylierungsreaktion mit Ethylenoxid weiter alkoxyliert werden und dadurch primäre Hydroxylgruppen aufweisen.
- Styrol-Acrylnitril- oder Acrylnitril-Methylmethacrylat-gepfropfte Polyetherpolyole.
- Polyesterpolyole, auch Oligoesterole genannt, hergestellt beispielsweise aus zwei- bis dreiwertigen Alkoholen wie beispielsweise 1,2-Ethandiol, Diethylenglykol, 1,2-Propandiol, Dipropylenglykol, 1,4-Butandiol, 1,5-Pentandiol, 1,6-Hexandiol, Neopentylglykol, Glycerin, 1,1,1-Trimethylolpropan oder Mischungen der vorgenannten Alkohole mit organischen Dicarbonsäuren oder deren Anhydride oder Ester wie beispielsweise Bernsteinsäure, Glutarsäure, Adipinsäure, Korksäure, Azelainsäure, Sebacinsäure, Dodecandicarbonsäure, Maleinsäure, Fumarsäure, Phthalsäure, Isophthalsäure, Terephthalsäure und Hexahydrophthalsäure oder Mischungen der vorgenannten Säuren, sowie Polyesterpolyole aus Lactonen wie beispielsweise ε-Caprolacton.
- Polycarbonatpolyole, wie sie durch Umsetzung beispielsweise der oben genannten - zum Aufbau der Polyesterpolyole eingesetzten - Alkohole mit Dialkylcarbonaten, Diarylcarbonaten oder Phosgen zugänglich sind.
- Polyacrylat- und Polymethacrylatpolyole.
- Polykohlenwasserstoffpolyole, auch Oligohydrocarbonole genannt, wie beispielsweise polyhydroxyfunktionelle Ethylen-Propylen-, Ethylen-Butylenoder Ethylen-Propylen-Dien-Copolymere, wie sie beispielsweise von der Firma Kraton Polymers hergestellt werden, oder polyhydroxyfunktionelle Copolymere aus Dienen wie 1,3-Butandien oder Diengemischen und Vinylmonomeren wie Styrol, Acrylnitril oder Isobutylen, oder polyhydroxyfunktionelle Polybutadienpolyole, wie beispielsweise solche, die durch Copolymerisation von 1,3-Butadien und Allylalkohol hergestellt werden und auch hydriert sein können.
- Polyhydroxyfunktionelle Acrylonitril/Butadien-Copolymere, wie sie beispielsweise aus Epoxiden oder Aminoalkoholen und carboxylterminierten Acrylonitril/Butadien-Copolymeren (kommerziell erhältlich unter dem Namen Hycar^{®} CTBN von Emerald Performance Materials, LLC, USA) hergestellt werden können.

Vorteilhaft sind die Polymere **Q_{PM}** di- oder höherfunktioneller Polyole mit OH-Äquivalentsgewichten von 300 bis 6000 g/OH-Äquivalent, insbesondere von 600 bis 4000 g/OH-Äquivalent, vorzugsweise 700 bis 2200 g/OH-Äquivalent. Weiterhin vorteilhaft sind die Polyole ausgewählt aus der Gruppe bestehend aus Polyethylenglycolen, Polypropylenglycolen, Polyethylenglycol-Polypropylenglycol-Block-Co-polymeren, Polybutylenglycolen, hydroxylterminierten Polybutadienen, hydroxylterminierten Butadien/Acrylnitril-Copolymeren, hydroxylterminierten synthetischen Kautschuken, deren Hydrierungsprodukten und Gemische dieser genannten Polyole.

Im Weiteren können als Polymere **Q_{PM}** auch di- oder höherfunktionelle aminoterminierte Polyethylenether, Polypropylenether, wie sie zum Beispiel kommerziell erhältlich sind unter dem Namen Jeffamine^{®} von Huntsman International, LLC, USA, vertrieben werden, Polybutylenether, Polybutadiene, Butadien/Acrylnitril-Copolymere, wie sie zum Beispiel kommerziell erhältlich sind unter dem Namen Hycar^{®} ATBN von Emerald Performance Materials, LLC, USA, sowie weitere Aminogruppen-terminierte synthetische Kautschuke oder Gemische der genannte Komponenten verwendet werden.

Es ist weiterhin möglich, dass die Polymere **Q_{PM}** auch kettenverlängert sein können, wie es in dem Fachmann bekannter Art und Weise durch die Reaktion von Polyaminen, Polyolen und Polyisocyanaten, insbesondere von Diaminen, Diolen und Diisocyanaten, durchgeführt werden kann.

Bei den Polyurethanpolymeren **PU1** generell und bei den kettenverlängerten Polyurethanpolymeren im Speziellen ist vorteilhaft darauf zu achten, dass die Polymere nicht zu hohe Viskositäten aufweisen, insbesondere wenn höher funktionelle Verbindungen für die Kettenverlängerung eingesetzt werden, denn dies kann deren Umsetzung zu den Polymeren der Formel (I), beziehungsweise die Applikation der Zusammensetzung, erschweren.

Als Polymere **Q_{PM}** bevorzugt sind Polyole mit Molekulargewichten zwischen 600 und 6000 g/mol, welche ausgewählt sind aus der Gruppe bestehend aus Polyethylenglykolen, Polypropylenglykolen, Polyethylenglykol-Polypropylenglykol-Blockpolymeren, Polybutylenglykolen, hydroxylterminierte Polybutadiene, hydroxylterminierte Butadien-Acrylnitril-Copolymere sowie deren Gemische.

Als Polymere **Q_{PM}** sind insbesondere bevorzugt α,ω-Dihydroxypolyalkylenglykole mit C₂- bis C₆-Alkylengruppen oder mit gemischten C₂- bis C₆-Alkylengruppen, die mit Amino-, Thiol- oder, bevorzugt, Hydroxylgruppen terminiert sind. Besonders bevorzugt sind Polypropylenglykole oder Polybutylenglykole. Weiterhin besonders bevorzugt sind Hydroxylgruppenterminierte Polyoxybutylene.

Als Polyphenol **Q_{PP}** sind insbesondere Bis-, Tris- und Tetraphenole geeignet. Hierunter werden nicht nur reine Phenole, sondern gegebenenfalls auch substituierte Phenole verstanden. Die Art der Substitution kann sehr vielfältig sein. Insbesondere wird hierunter eine Substitution direkt am aromatischen Kern, an den die phenolische OH-Gruppe gebunden ist, verstanden. Unter Phenolen werden weiterhin nicht nur einkernige Aromaten, sondern auch mehrkernige oder kondensierte Aromaten oder Heteroaromaten verstanden, welche die phenolische OH-Gruppe direkt am Aromaten, beziehungsweise Heteroaromaten, aufweisen. Durch die Art und Stellung eines solchen Substituenten wird unter anderem die für die Bildung des Polyurethanpolymeren **PU1** nötige Reaktion mit Isocyanaten beeinflusst.

Besonders eignen sich die Bis- und Trisphenole. Als Bisphenole oder Trisphenole sind beispielsweise geeignet 1,4-Dihydroxybenzol, 1,3-Dihydroxybenzol, 1,2-Dihydroxybenzol, 1,3-Dihydroxytoluol, 3,5-Dihydroxybenzoate, 2,2-Bis(4-hydroxyphenyl)propan (= Bisphenol A), Bis(4-hydroxyphenyl)methan (= Bisphenol F), Bis(4-hydroxyphenyl)sulfon (= Bisphenol S), Naphtoresorcin, Dihydroxynaphthalin, Dihydroxyanthrachinon, Dihydroxy-biphenyl, 3,3-bis(p-hydroxyphenyl)phthalide, 5,5-Bis(4-hydroxyphenyl)hexahydro-4,7-methanoindan, Phenolpthalein, Fluorescein, 4,4'-[bis-(hydroxyphenyl)-1,3-Phenylene-bis-(1-Methyl-ethyliden)] (= Bisphenol M), 4,4'-[bis-(hydroxyphenyl)-1,4-Phenylenebis-(1-Methyl-ethyliden)] (= Bisphenol P), 2,2'-Diallyl-Bisphenol A, Diphenole und Dikresole hergestellt durch Umsetzung von Phenolen oder Kresolen mit Di-isopropylidenbenzol, Phloroglucin, Gallsäureester, Phenoloder Kresolnovolacke mit einer OH-Funktionalität von 2.0 bis 3.5 sowie alle Isomeren der vorgenannten Verbindungen.

Bevorzugte Diphenole und Dikresole hergestellt durch Umsetzung von Phenolen oder Kresolen mit Di-isopropylidenbenzol weisen eine chemische Strukturformel auf, wie sie entsprechend für Kresol als Bespiel nachfolgend gezeigt ist:

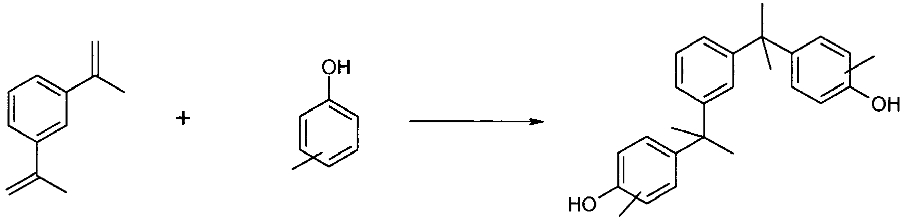

Besonders bevorzugt sind schwerflüchtige Bisphenole. Als meist bevorzugt gelten Bisphenol A, Bisphenol M, Bisphenol S und 2,2'-Diallyl-Bisphenol A.

Bevorzugt weist das **Q_{PP}** 2 oder 3 phenolische Gruppen auf.

In einer ersten Ausführungsform wird das Polyurethanpolymer **PU1** aus mindestens einem Diisocyanat oder Triisocyanat sowie aus einem Polymeren **Q_{PM}** mit endständigen Amino-, Thiol- oder Hydroxylgruppen hergestellt. Die Herstellung des Polyurethanpolymers **PU1** erfolgt in einer dem Polyurethan-Fachmann bekannten Art und Weise, insbesondere, indem das Diisocyanat oder Triisocyanat in einem stöchiometrischen Überschuss in Bezug auf die Amino-, Thiol- oder Hydroxylgruppen des Polymeren **Q_{PM}** eingesetzt wird.

In einer zweiten Ausführungsform wird das Polyurethanpolymer **PU1** aus mindestens einem Diisocyanat oder Triisocyanat sowie aus einem, gegebenenfalls substituierten, Polyphenol **Q_{PP}** hergestellt. Die Herstellung des Polyurethanpolymers **PU1** erfolgt in einer dem Polyurethan-Fachmann bekannter Art und Weise, insbesondere indem das Diisocyanat oder Triisocyanat in einem stöchiometrischen Überschuss in Bezug auf die phenolischen Gruppen des Polyphenols **Q_{PP}** eingesetzt wird.

In einer dritten Ausführungsform wird das Polyurethanpolymer **PU1** aus mindestens einem Diisocyanat oder Triisocyanat sowie aus einem Polymeren **Q_{PM}** mit endständigen Amino-, Thiol- oder Hydroxylgruppen sowie aus einem, gegebenenfalls substituierten, Polyphenol **Q_{PP}** hergestellt. Zur Herstellung des Polyurethanpolymers **PU1** aus mindestens einem Diisocyanat oder Triisocyanat sowie aus einem Polymeren **Q_{PM}** mit endständigen Amino-, Thiol- oder Hydroxylgruppen und / oder aus einem, gegebenenfalls substituierten, Polyphenol **Q_{PP}** stehen unterschiedliche Möglichkeiten zur Verfügung.

In einem ersten Verfahren, hier "Eintopfverfahren" genannt, wird eine Mischung von mindestens einem Polyphenol **Q_{PP}** und mindestens einem Polymeren **Q_{PM}** mit mindestens einem Diisocyanat oder Triisocyanat in einem lsocyanatüberschuss umgesetzt.

In einem zweiten Verfahren, hier "2-Schrittverfahren I" genannt, wird mindestens ein Polyphenol **Q_{PP}** mit mindestens einem Diisocyanat oder Triisocyanat in einem Isocyanatüberschuss und anschliessend mit mindestens einem Polymeren **Q_{PM}** in Unterschuss umgesetzt.

Im dritten Verfahren schliesslich, hier "2-Schrittverfahren II" genannt, wird mindestens ein Polymer **Q_{PM}** mit mindestens einem Diisocyanat oder Triisocyanat in einem Isocyanatüberschuss und anschliessend mit mindestens einem Polyphenol **Q_{PP}** in Unterschuss umgesetzt.

Die drei Verfahren führen zu Isocyanat-terminierten Polyurethanpolymeren **PU1,** die sich bei gleicher Zusammensetzung in der Sequenz ihrer Bausteine unterscheiden können. Es sind alle drei Verfahren geeignet, jedoch ist das "2-Schrittverfahren II" bevorzugt.

Werden die beschriebenen Isocyanat-terminierten Polyurethanpolymeren **PU1** aus difunktionellen Komponenten aufgebaut, zeigte sich, dass das Äquivalenz-Verhältnis Polymer **Q_{PM}**/Polyphenol **Q_{PP}** bevorzugt grösser als 1.5 und das Äquivalenz-Verhältnis Polyisocyanat/(Polyphenol **Q_{PP}** + Polymer **Q_{PM})** bevorzugt grösser als 1.2 ist.

Ist die durchschnittliche Funktionalität der verwendeten Komponenten grösser als 2, so erfolgt eine raschere Molekulargewichtserhöhung als im rein difunktionellen Fall. Für den Fachmann ist klar, dass die Grenzen der möglichen Äquivalenz-Verhältnisse stark davon abhängen, ob entweder das gewählte Polymer **Q_{PM},** das Polyphenol **Q_{PP},** das Polyisocyanat oder mehrere der genannten Komponenten eine Funktionalität > 2 besitzen. Je nachdem können unterschiedliche Äquivalenz-Verhältnisse eingestellt werden, deren Grenzen durch die Viskosität der resultierenden Polymere bestimmt sind und die experimentell von Fall zu Fall bestimmt werden müssen.

Das Polyurethanpolymer **PU1** weist bevorzugt elastischen Charakter auf und zeigt eine Glasübergangstemperatur Tg von ≤ 0°C.

Das Polyurethanpolymer der Formel (I) kann aus einem Polyurethanpolymer **PU1,** welches die Formel (III) aufweist, und gegebenenfalls den NCOreaktiven Verbindungen R²-H und/oder R³-H hergestellt werden.

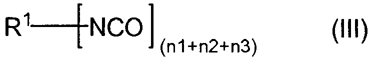

Bevorzugt handelt es sich bei dem Rest R² um eine Gruppe der Formel (II) und bei dem Rest R³ um eine Gruppe der Formel (II'). Ein derartiges bevorzugtes Polyurethanpolymer der Formel (I), ist herstellbar durch die Umsetzung eines Polyurethanpolymers **PU1** der Formel (III) mit Monohydroxyl-Epoxidverbindungen der Formel (IV) bzw. der Formel (IV').

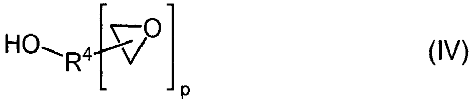

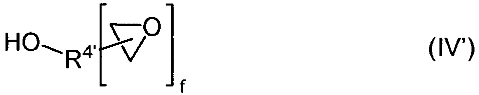

Die Monohydroxyl-Epoxidverbindung der Formel (IV), bzw. der Formel (IV'), weist 1, 2 oder 3 Epoxidgruppen auf. Die Hydroxylgruppe dieser Monohydroxyl-Epoxidverbindung der Formel (IV) bzw. (IV') kann eine primäre oder eine sekundäre Hydroxylgruppe darstellen.

Solche Monohydroxyl-Epoxidverbindungen lassen sich beispielsweise durch Umsetzung von Polyolen mit Epichlorhydrin erzeugen. Je nach Reaktionsführung entstehen bei der Umsetzung von mehrfunktionellen Alkoholen mit Epichlorhydrin als Nebenprodukte auch die entsprechenden Monohydroxyl-Epoxidverbindungen in unterschiedlichen Konzentrationen. Diese lassen sich durch übliche Trennoperationen isolieren. In der Regel genügt es aber, das bei der Glycidylisierungsreaktion von Polyolen erhaltene Produktgemisch aus vollständig und partiell zum Glycidylether reagiertem Polyol einzusetzen. Beispiele solcher Monohydroxyl-Epoxidverbindungen sind Butandiolmonoglycidylether (enthalten in Butandioldiglycidylether), Hexandiolmonoglycidylether (enthalten in Hexandioldiglycidylether), Cyclohexandimethanolglycidylether,Trimethylolpropandiglycidylether (als Gemisch enthalten in Trimethylolpropantriglycidylether), Glycerindiglycidylether (als Gemisch enthalten in Glycerintriglycidylether), Pentaerythrittriglycidylether (als Gemisch enthalten in Pentaerythrittetraglycidylether). Vorzugsweise wird Trimethylolpropandiglycidylether, welcher zu einem relativ hohen Anteil in üblich hergestellten Trimethylolpropantriglycidylether vorkommt, verwendet.

Es können aber auch andere ähnliche Monohydroxyl-Epoxidverbindungen, insbesondere Glycidol, 3-Glycidyloxybenzylalkohol oder Hydroxymethylcyclohexenoxid eingesetzt werden. Weiterhin bevorzugt ist der β-Hydroxyether der Formel (V), der in handelsüblichen flüssigen Epoxidharzen, hergestellt aus Bisphenol A (R = CH₃) und Epichlorhydrin, zu etwa 15 % enthalten ist, sowie die entsprechenden β-Hydroxyether der Formel (V), die bei der Reaktion von Bisphenol F (R = H) oder des Gemisches von Bisphenol A und Bisphenol F mit Epichlorhydrin gebildet werden.

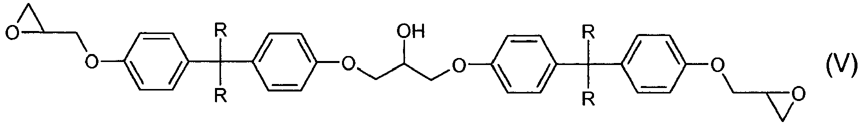

Weiterhin bevorzugt sind auch Destillationsrückstände, welche bei der Herstellung von hochreinen, destillierten Epoxid-Flüssigharzen anfallen. Solche Destillationsrückstände weisen eine bis zu drei Mal höhere Konzentration an hydroxylhaltigen Epoxiden auf als handelübliche undestillierte Epoxid-Flüssigharze. Im Weiteren können auch unterschiedlichste Epoxide mit einer β-Hydroxyether-Gruppe, hergestellt durch die Reaktion von (Poly-)Epoxiden mit einem Unterschuss von einwertigen Nukleophilen wie Carbonsäuren, Phenolen, Thiolen oder sec.- Aminen, eingesetzt werden.

Die freie primäre oder sekundäre OH-Funktionalität der Monohydroxyl-Epoxidverbindung der Formel (IV) bzw. (IV') lässt eine effiziente Umsetzung mit terminalen Isocyanatgruppen von Polymeren zu, ohne dafür unverhältnismässige Überschüsse der Epoxidkomponente einsetzen zu müssen.

Für die Umsetzung der Polyurethanpolymere **PU1** der Formel (III) zu Polyurethanpolymeren der Formel (I), bei welchen n3 = 0, R²≠ R³ ist, können R²H und R³H zusammen oder sequentiell eingesetzt werden. Die sequentielle Umsetzung hat den Vorteil, dass die Reaktion besser gesteuert werden kann, so dass die Bildung von symmetrischen Addukten reduziert wird. Die Verbindung, welche bei einer sequenziellen Umsetzung im zweiten Schritt eingesetzt wird, wird vorteilhaft im stöchiometrischen Überschuss eingesetzt, um zu gewährleisten, dass alle NCO-Gruppen abreagiert werden.

Der Anteil des Polyurethanpolymers der Formel (I) beträgt vorzugsweise 5 bis 50 Gew.-%, insbesondere 10 bis 40 Gew.-%, bevorzugt 15 bis 35 Gew.-%, bezogen auf das Gesamtgewicht des Schaums.

Die hitzehärtende Zusammensetzung **Z** umfasst mindestens ein Epoxidharz **A**, welches durchschnittlich mehr als eine Epoxidgruppe pro Molekül aufweist.

Das Epoxidharz **A** ist vorzugsweise ein Epoxid-Flüssigharz oder ein Epoxid-Festharz. Der Begriff "Epoxid-Festharz" ist dem Epoxid-Fachmann bestens bekannt und wird im Gegensatz zu "Epoxid-Flüssigharz" verwendet. Die Glasübergangstemperatur Tg von Festharzen liegt über der Raumtemperatur (23 ± 1 °C), d.h. sie lassen sich bei Raumtemperatur zu schüttfähigen Pulvern zerkleinern.

Bevorzugte Epoxid-Festharze weisen die Formel (VI) auf

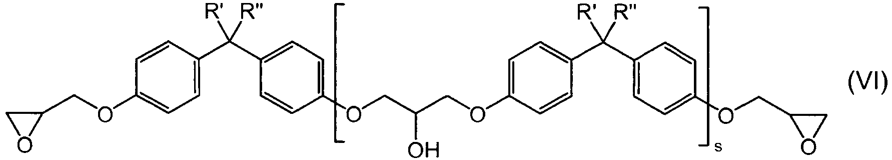

Hierbei stehen die Substituenten R' und R" unabhängig voneinander entweder für H oder CH₃. Weiterhin steht der Index s für einen Wert von ≥ 1.5, insbesondere von 2 bis 12.

Derartige Epoxid-Festharze sind beispielsweise kommerziell erhältlich von The Dow Chemical Company, USA, von Huntsman International, LLC, USA, oder von Hexion Specialty Chamicals Inc., USA.

Verbindungen der Formel (VI) mit einem Index s zwischen 1 und 1.5 werden vom Fachmann als Semisolid-Epoxidharze bezeichnet. Für die hier vorliegende Erfindung werden sie ebenfalls als Festharze betrachtet. Bevorzugt sind jedoch Epoxidfestharze im engeren Sinn, d.h. wo der Index s einen Wert von ≥ 1.5 aufweist.

Bevorzugte Epoxid-Flüssigharze weisen die Formel (VII) auf

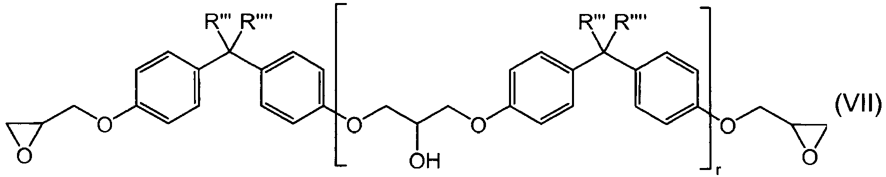

Hierbei stehen die Substituenten R'" und R"" unabhängig voneinander entweder für H oder CH₃. Weiterhin steht der Index r für einen Wert von 0 bis 1. Bevorzugte Epoxid-Flüssigharze weisen einen Wert r von ≤ 0.2 auf.

Es handelt sich somit vorzugsweise um Diglycidylether von Bisphenol A (DGEBA), von Bisphenol F sowie von Bisphenol A/F. Die Bezeichnung ,A/F' verweist hierbei auf eine Mischung von Aceton mit Formaldehyd, welche als Edukt bei dessen Herstellung verwendet wird. Solche Flüssigharze sind beispielsweise unter den Handelsnamen Araldite^{®} GY 250, Araldite^{®} PY 304, Araldite^{®} GY 282 von der Firma Huntsman International, LLC, USA, oder D.E.R.^{®} 331 oder D.E.R.^{®} 330 von der Firma The Dow Chemical Company, USA, oder unter den Handelsnamen Epikote^{®} 828 oder Epikote^{®} 862 von der Firma Hexion Specialty Chamicals Inc., USA, kommerziell erhältlich.

Bevorzugt stellt das Epoxidharz **A** ein Epoxid-Flüssigharz der Formel (VII) dar. In einer noch mehr bevorzugten Ausführungsform enthält der hitzehärtende Schaum sowohl mindestens ein Epoxid-Flüssigharz der Formel (VII) als auch mindestens ein Epoxid-Festharz der Formel (VI).

Der Anteil von Epoxidharzes **A** beträgt vorzugsweise 2 bis 80 Gew.-%, insbesondere 5 bis 70 Gew.-%, bevorzugt 5.1 bis 70 Gew.-%, weiter bevorzugt 7 bis 60 Gew.-%, bezogen auf das Gesamtgewicht des Schaums.

In einer ersten bevorzugten Ausführungsform weist die Zusammensetzung **Z** des hitzehärtenden Schaums, wie er vorhergehend beschrieben ist, ein Polyurethanpolymer der Formel (I) auf, bei welchem n3 = 0 ist, der Rest R² für einen Rest der Formel (II) und der Rest R³ für einen Rest der Formel (II') steht. Weiterhin weist der hitzehärtende Schaum in dieser ersten Ausführungsform mindestens ein Epoxidharz **A** auf.

In einer zweiten Ausführungsform weist die Zusammensetzung **Z** des hitzehärtenden Schaums ein Polyurethanpolymer der Formel (I) auf, bei welchem n1, n2 sowie n3 ≠ 0 sind. Weiterhin weist der hitzehärtende Schaum in dieser zweiten Ausführungsform mindesten ein Epoxidharz **A** auf.

Es ist dem Fachmann klar, dass in der Zusammensetzung **Z** vorhandene Isocyanatgruppen mit allenfalls vorhandenen Hydroxylgruppen des Epoxidharzes **A** reagieren können. Diese Umsetzung ist in gewissen Fällen von Vorteil und trägt zur Flexibilisierung und zur Zähmodifizierung des hitzegehärteten Schaums bei.

Das Gas, welches im hitzehärtenden Schaum enthalten ist, ist ausgewählt aus der Gruppe bestehend aus Stickstoff (N₂), Kohlendioxid (CO₂), Wasserstoff (H₂), Kohlenmonoxid (CO), Lachgas (N₂O), ein Edelgas und beliebigen Gemischen dieser Gase sowie Gasgemische wie Luft. Insbesondere geeignet sind Stickstoff oder Luft. Bevorzugt ist Luft. Das Gas kann dabei getrocknet oder nicht getrocknet sein. Bevorzugt ist das Gas getrocknet.

Das Gas ist dabei in Zellen im hitzehärtenden Schaum eingeschlossen, welche homogen im Schaum verteilt sind.

Die Zusammensetzung **Z** kann zusätzlich chemische oder physikalische Treibmittel enthalten oder auch nicht. Als chemische Treibmittel werden solche Substanzen bezeichnet, welche unter Einfluss von Wärme, elektromagnetische Strahlung oder Chemikalien gasförmige Substanzen bilden oder abspalten. Derartige Substanzen sind insbesondere Azodicarbonamide, Sulfohydrazide, Hydrogencarbonate oder Carbonate. Als physikalische Treibmittel können Verbindungen eingesetzt werden, welche beispielsweise bei Änderung der Temperatur, des Drucks oder des Volumens, insbesondere bei Erhöhung der Temperatur oder bei Verringerung des Drucks, in den gasförmigen Aggregatszustand übergehen und so durch Volumenexpansion eine Schaumstruktur bilden. Insbesondere sind solche physikalischen Treibmittel Gase, welche in flüssigem oder überkritischem Zustand in eine unter Druck stehende Zusammensetzung injiziert und eingemischt werden, oder Flüssigkeiten, welche bei erhöhter Temperatur Verdampfen. Weiterhin können als physikalische Treibmittel Gase oder niedrigsiedende Flüssigkeiten eingesetzt werden, welche in mikroverkapselter Form in die Zusammensetzung eingebracht werden.

Der Anteil des Treibmittels beträgt vorteilhaft 0.1 bis 3 Gew.-%, bezogen auf das Gesamtgewicht des Schaums.

Werden zur Herstellung des hitzehärtenden Schaums Treibmittel eingesetzt, welche durch Wärmeeinfluss wirken, ist darauf zu achten, dass die Schäumungstemperatur unterhalb der Aushärtungstemperatur des hitzehärtenden Schaums liegt, da der Schaum ansonsten schon während des Schäumvorgangs aushärten würde.

Treibmittel werden in der Zusammensetzung **Z,** bzw. im hitzehärtenden Schaum, insbesondere eingesetzt, um den hitzehärtenden Schaum während des Aushärtevorgangs nachzuschäumen. Vorzugsweise sind sowohl die Zusammensetzung **Z** als auch der hitzehärtende Schaum frei von chemischen Treibmitteln.

Der hitzehärtende Schaum kann weiterhin ein Thixotropiermittel **C** auf Basis eines Harnstoffderivates enthalten. Das Harnstoffderivat ist insbesondere ein Umsetzungsprodukt eines aromatischen monomeren Diisocyanates mit einer aliphatischen Aminverbindung. Es ist auch durchaus möglich, mehrere unterschiedliche monomere Diisocyanate mit einer oder mehreren aliphatischen Aminverbindungen oder ein monomeres Diisocyanat mit mehreren aliphatischen Aminverbindungen umzusetzen. Als besonders vorteilhaft hat sich das Umsetzungsprodukt von Methylendiphenyldiisocyanat (MDI) mit Butylamin erwiesen.

Das Harnstoffderivat ist vorzugsweise in einem Trägermaterial vorhanden. Das Trägermaterial kann ein Weichmacher, insbesondere ein Phthalat oder ein Adipat sein, vorzugsweise ein Düsodecylphthalat (DIDP) oder Dioctyladipat (DOA). Das Trägermittel kann auch ein nicht-diffundierendes Trägermittel sein. Dies ist bevorzugt, um nach der Aushärtung eine möglichst geringe Migration von nicht regierten Bestandteilen zu gewährleisten. Bevorzugt sind als nicht-diffundierende Trägermittel blockierte Polyurethanpolymere.

Die Herstellung von solchen bevorzugten Harnstoffderivaten und Trägermaterialien ist im Detail in der Patentanmeldung EP 1 152 019 A1 beschrieben. Das Trägermaterial ist vorteilhaft ein blockiertes Polyurethanpolymer **PU2,** insbesondere erhalten durch Umsetzung eines trifunktionellen Polyetherpolyols mit IPDI und anschliessender Blockierung der endständigen Isocyanatgruppen mit ε-Caprolactam.

Vorteilhaft beträgt der Gesamtanteil des Thixotropiermittels C 0 bis 40 Gew.-%, vorzugsweise 5 bis 25 % Gew.-%, bezogen auf das Gesamtgewicht des Schaums. Vorzugsweise liegt das Gewichtsverhältnis von Harnstoffderivat zu dem gegebenenfalls vorhandenen Trägermittel zwischen 0.02 : 1 und 1 : 1, insbesondere zwischen 0.05 : 1 und 0.3 : 1.

Der hitzehärtende Schaum enthält vorzugsweise weiterhin einen Flüssigkautschuk **D,** welcher vorzugsweise ein carboxyl- oder epoxidterminiertes Polymer ist.

In einer weiteren Ausführungsform ist dieser Flüssigkautschuk **D ein** carboxyl- oder epoxidterminiertes Acrylnitril/Butadien-Copolymer oder ein Derivat davon. Derartige Flüssigkautschuke sind beispielsweise kommerziell erhältlich unter dem Handelsnamen Hycar^{®} CTBN und CTBNX und ETBN von Emerald Performance Materials, LLC, USA. Als Derivate sind insbesondere Epoxidgruppen aufweisende Elastomer-modifizierte Polymere, wie sie unter der Produktelinie Polydis^{®}, vorzugsweise aus der Produktelinie Polydis^{®} 36, von der Schill+Seilacher Gruppe, Deutschland, oder unter der Produktelinie Albipox^{®} von Hanse Chemie AG, Deutschland, kommerziell erhältlich sind, geeignet.

In einer weiteren Ausführungsform ist dieser Flüssigkautschuk **D** ein Polyacrylatflüssigkautschuk, der mit flüssigen Epoxidharzen vollständig mischbar ist und sich erst beim Aushärten der Epoxidharzmatrix zu Mikrotröpfchen entmischt. Derartige Polyacrylatflüssigkautschuke sind beispielsweise unter der Bezeichnung 20208-XPA von Rohm and Haas Co., USA, erhältlich.

Es ist dem Fachmann klar, dass natürlich auch Mischungen von Flüssigkautschuken verwendet werden können, insbesondere Mischungen von carboxyl- oder epoxidterminiertes Acrylnitril/Butadien-Copolymeren oder Derivaten davon mit epoxidterminierten Polyurethanpolymeren.

Der Flüssigkautschuk **D** wird vorteilhaft in einer Menge von 1 bis 35 Gew.-%, insbesondere 1 bis 25 Gew.-%, bezogen auf das Gesamtgewicht des Schaums, eingesetzt.

Der hitzehärtende Schaum enthält vorzugsweise weiterhin einen festen Zähigkeitsverbesserer **E.** Unter einem "Zähigkeitsverbesserer" wird hierbei und im Folgenden ein Zusatz zu einer Epoxidharzmatrix verstanden, der bereits bei geringen Zuschlägen von 0.1 bis 15 Gew.-%, insbesondere von 0.5 bis 8 Gew.-%, bezogen auf das Gesamtgewicht des Schaums, eine deutliche Zunahme der Zähigkeit bewirkt und somit in der Lage ist, höherer Biege-, Zug-, Schlag- oder Stossbeanspruchung aufzunehmen, bevor die Matrix einreisst oder bricht.

Der feste Zähigkeitsverbesserer **E** ist in einer ersten Ausführungsform ein organisches lonen-getauschtes Schichtmineral **E1.**

Das Ionen-getauschte Schichtmineral **E1** kann entweder ein Kationen-getauschtes Schichtmineral **E1c** oder ein Anionen-getauschtes Schichtmineral **E1a** sein.

Das Kationen-getauschte Schichtmineral **E1c** wird hierbei erhalten aus einem Schichtmineral **E1',** bei welchem zumindest ein Teil der Kationen durch organische Kationen ausgetauscht worden sind. Beispiele für derartige Kationen-getauschte Schichtmineralien **E1c** sind insbesondere diejenigen, welche in US 5,707,439 oder in US 6,197,849 erwähnt sind. Ebenso ist dort das Verfahren zur Herstellung dieser Kationen-getauschten Schichtminerale **E1c** beschrieben. Bevorzugt als Schichtmineral **E1'** ist ein Schichtsilikat. Insbesondere bevorzugt handelt es sich beim Schichtmineral **E1'** um ein Phyllosilikat, wie sie in US 6,197,849 Spalte 2, Zeile 38 bis Spalte 3, Zeile 5 beschrieben sind, insbesondere um einen Bentonit. Als besonders geeignet haben sich Schichtmineral **E1'** wie Kaolinit oder ein Montmorillionit oder ein Hectorit oder ein Illit gezeigt.

Zumindest ein Teil der Kationen des Schichtminerals **E1'** wird durch organische Kationen ersetzt. Beispiele für derartige Kationen sind n-Octylammonium, Trimethyldodecylammonium, Dimethyldodecylammonium oder Bis(hydroxyethyl)octadecylammonium oder ähnliche Derivate von Aminen, die aus natürlichen Fetten und Ölen gewonnen werden können; oder Guanidiniumkationen oder Amidiniumkationen; oder Kationen der N-substituierten Derivate von Pyrrolidin, Piperidin, Piperazin, Morpholin, Thiomorpholin; oder Kationen von 1,4-Diazobicyclo[2.2.2]octan (DABCO) und 1-Azobicyclo[2.2.2]octan; oder Kationen von N-substituierten Derivaten von Pyridin, Pyrrol, Imidazol, Oxazol, Pyrimidin, Chinolin, Isochinoilin, Pyrazin, Indol, Bezimidazol, Benzoxaziol, Thiazol Phenazin und 2,2'-Bipyridin. Weiterhin sind geeignet cyclische Amidiniumkationen, insbesondere solche, wie sie in US 6,197,849 in Spalte 3 Zeile 6 bis Spalte 4 Zeile 67 offenbart werden. Cyclische Ammoniumverbindungen zeichnen sich gegenüber linearen Ammoniumverbindungen durch eine erhöhte Thermostabilität aus.

Bevorzugte Kationen-getauschte Schichtminerale **E1c** sind dem Fachmann unter dem Term Organoclay oder Nanoclay bekannt und sind kommerziell zum Beispiel unter den Gruppennamen Tixogel^{®} oder Nanofil^{®} (Südchemie AG, Deutschland), Cloisite^{®} (Southern Clay Products, Inc., USA) oder Nanomer^{®} (Nanocor, Inc., USA) erhältlich.

Das Anionen-getauschte Schichtmineral **E1a** wird hierbei erhalten aus einem Schichtmineral **E1",** bei welchem zumindest ein Teil der Anionen durch organische Anionen ausgetauscht worden sind. Ein Beispiel für ein derartig Anionen-getauschtes Schichtmineral **E1a** ist ein Hydrotalcit **E1",** bei dem zumindest ein Teil der Carbonat-Anionen der Zwischenschichten durch organische Anionen ausgetauscht wurden. Ein weiteres Beispiel sind funktionalisierte Alumoxane wie z. B. in US 6,322,890 beschrieben.

Es ist durchaus auch möglich, dass die Zusammensetzung gleichzeitig ein Kationen-getauschtes Schichtmineral **E1c** und ein Anionen-getauschtes Schichtmineral **E1a** enthält.

Der feste Zähigkeitsverbesserer ist in einer zweiten Ausführungsform ein Blockcopolymer **E2.** Das Blockcopolymer **E2** wird erhalten aus einer anionischen oder kontrollierten radikalischen Polymerisation von Methacrylsäureester mit mindestens einem weiteren eine olefinisch Doppelbindung aufweisenden Monomeren. Als eine olefinische Doppelbindung aufweisende Monomere sind insbesondere solche bevorzugt, bei denen die Doppelbindung unmittelbar mit einem Heteroatom oder mit mindestens einer weiteren Doppelbindung konjugiert ist. Insbesondere sind Monomere geeignet, welche ausgewählt sind aus der Gruppe umfassend Styrol, Butadien, Acrylnitril und Vinylacetat. Bevorzugt sind Acrylat-Styrol-Acrylsäure (ASA) Copolymere, erhältlich z.B. unter dem Namen GELOY^{®} 1020 von GE Plastics Co., USA.

Besonders bevorzugte Blockcopolymere **E2** sind Blockcopolymere aus Methacrylsäuremethylester, Styrol und Butadien. Derartige Blockcopolymere sind beispielsweise als Triblockcopolymere unter der Gruppenbezeichnung SBM bei Arkema, Inc., USA, erhältlich.

Der feste Zähigkeitsverbesserer **E** ist in einer dritten Ausführungsform ein Core-Shell Polymer **E3.** Core-Shell-Polymere bestehen aus einem elastischen Kernpolymer (Core) und einem starren Schalen-Polymer (Shell). Insbesondere geeignete Core-Shell-Polymere bestehen aus einem Kern aus elastischem Acrylat- oder Butadien-Polymer, den eine starre Schale eines starren thermoplastischen Polymers umhüllt. Diese Core-Shell Struktur bildet sich entweder spontan durch Entmischen eines Blockcopolymeren oder ist durch die Polymerisationsführung als Latex oder Suspensions-polymerisation mit nachfolgender Pfropfung vorgegeben. Bevorzugte Core-Shell-Polymere sind sogenannte MBS Polymere, welche kommerziell unter dem Handelsnamen Clearstrength^{®} von Arkema, Inc., USA, Paraloid^{®} von Rohm and Haas Co., USA, oder F-351 ™ von Zeon Chemicals L.P., USA, erhältlich sind.

Besonders bevorzugt sind Core-Shell Polymerpartikel, die bereits als getrockneter Polymerlatex vorliegen. Beispiele hierfür sind GENIOPERL^{®} M23A von Wacker Chemie AG, Deutschland, mit Polysiloxankern und Acrylatschale, strahlungsvernetzte Kautschukpartikel der NEP Reihe, hergestellt von Eliokem, Inc., USA, oder Nanopren^{®} von Lanxess AG, Deutschland, oder Paraloid^{®} EXL von Rohm and Haas Co., USA.

Weitere vergleichbare Beispiele für Core-Shell-Polymere werden unter dem Handelsamen Albidur^{®} von Nanoresins AG, Deutschland, angeboten.

Der feste Zähigkeitsverbesserer **E** ist in einer vierten Ausführungsform ein festes Umsetzungsprodukt **E4** eines carboxylierten festen Nitrilkautschuks mit überschüssigem Epoxidharz.

In einer fünften Ausführungsform ist der feste Zähigkeitsverbesserer **E** ein amorphes Siliciumdioxid, wie es beispielsweise beschrieben ist in WO 02/083776 A1 und in WO 2004/081076, deren Offenbarung hiermit eingeschlossen ist. Derartige Produkte sind kommerziell erhältlich unter dem Handelsnamen Albipox^{©} von Nanoresins AG, Deutschland.

Als fester Zähigkeitsverbesserer **E** sind Core-Shell Polymere bevorzugt.

Der hitzehärtende Schaum kann das feste Core-Shell Polymer **E3** enthalten, insbesondere in einer Menge von 0.1 bis 15 Gew.-%, vorzugsweise 1 bis 8 Gew.-%, bezogen auf das Gesamtgewicht des Schaums.

In einer weiteren bevorzugten Ausführungsform enthält die Zusammensetzung zusätzlich mindestens einen Füllstoff **F.** Bevorzugt handelt es sich hierbei um Glimmer, Talk, Kaolin, Wollastonit, Feldspat, Syenith, Chlorit, Bentonit, Montmorillonit, Calciumcarbonat (gefällt oder gemahlen), Dolomit, Quarz, Kieselsäuren (pyrogen oder gefällt), Cristobalit, Calciumoxid, Aluminiumhydroxid, Magnesiumoxid, Keramikhohlkugeln, Glashohlkugeln, organische Hohlkugeln, Glaskugeln, Farbpigmente. Als Füllstoff **F** sind sowohl die organisch beschichteten als auch die unbeschichteten kommerziell erhältlichen und dem Fachmann bekannten Formen gemeint.

Vorteilhaft beträgt der Anteil des Füllstoffs **F** 3 bis 50 Gew.-%, vorzugsweise 5 bis 35 Gew.-%, insbesondere 5 bis 25 Gew.-%, bezogen auf das Gesamtgewicht des Schaums.

In einer weiteren bevorzugten Ausführungsform enthält die Zusammensetzung zusätzlich mindestens einen Epoxidgruppen-aufweisenden Reaktivverdünner **G.** Bei diesen Reaktivverdünnern **G** handelt es sich insbesondere um:
- Glycidylether von monofunktionellen gesättigten oder ungesättigten, verzweigten oder unverzweigten, zyklischen oder offenkettigen C₄ - C₃₀ Alkoholen, z.B. Butanolglycidylether, Hexanolglycidylether, 2-Ethylhexanolglycidylether, Allylglycidylether, Tetrahydrofurfuryl- und Furfurylglycidylether, Trimethoxysilylglycidylether etc.
- Glycidylether von difunktionellen gesättigten oder ungesättigten, verzweigten oder unverzweigten, zyklischen oder offenkettigen C₂ - C₃₀ Alkoholen, z.B Ethylenglykol-, Butandiol-, Hexandiol-, Oktandiolgylcidylether, Cyclohexandimethanoldigylcidylether, Neopentylglycoldiglycidylether etc.
- Glycidylether von tri- oder polyfunktionellen, gesättigten oder ungesättigten, verzweigten oder unverzweigten, zyklischen oder offenkettigen Alkoholen wie epoxidiertes Rhizinusöl, epoxidiertes Trimethylolpropan, epoxidiertes Pentaerythrol oder Polyglycidylether von aliphatischen Polyolen wie Sorbitol, Glycerin, Trimethylolpropan etc.
- Glycidylether von Phenol- und Anilinverbindungen wie Phenylglycidylether, Kresylglycidylether, *p-tert.*-Butylphenylglycidylether, Nonylphenolglycidylether, 3-*n*-Pentadecenyl-glycidylether (aus Cashewnuss-Schalen-Öl), N,N-Diglycidylanilin etc.
- Epoxidierte Amine wie N, N-Diglycidylcyclohexylamin etc.
- Epoxidierte Mono- oder Dicarbonsäuren wie Neodecansäureglycidylester, Methacrylsäureglycidylester, Benzoesäureglycidylester, Phthalsäure-, Tetra- und Hexahydrophthalsäurediglycidylester, Diglycidylester von dimeren Fettsäuren etc.
- Epoxidierte di- oder trifunktionelle, nieder- bis hochmolekulare Polyetherpolyole wie Polyethylenglycoldiglycidylether, Polypropyleneglycoldiglycidylether etc.

Besonders bevorzugt sind Hexandioldiglycidylether, Kresylglycidylether, p-*tert*.-Butylphenylglycidylether, Polypropylenglycoldiglycidylether und Polyethylenglycoldiglycidylether.

Vorteilhaft beträgt der Anteil des Epoxidgruppen-aufweisenden Reaktivverdünners **G** 0.5 bis 20 Gew.-%, vorzugsweise 1 bis 8 Gew.-%, bezogen auf das Gesamtgewicht des Schaums.

Die Zusammensetzung kann weitere Bestandteile, insbesondere Katalysatoren, Hitze- und/oder Lichtstabilisatoren, Thixotropiermittel, Weichmacher, Lösungsmittel, mineralische oder organische Füllstoffe, Treibmittel, Farbstoffe und Pigmente umfassen.

Weiterhin umfasst die Erfindung ein Verfahren zur Herstellung eines hitzehärtenden Schaums.

Ein erstes, bevorzugtes, Verfahren zur Herstellung eines hitzehärtenden Schaums besteht darin, einer hitzehärtenden Zusammensetzung **Z,** bei Temperaturen von 20 bis 80 °C, insbesondere von 20 bis 60 °C, und Atmosphärendruck das Gas zuzuführen und mit Hilfe einer Mischvorrichtung in die Zusammensetzung einzumischen und zu verteilen. Die Zuführung des Gases kann in diesem Verfahren beispielsweise dadurch erfolgen, dass das Gas über eine Überdruckleitung in die Zusammensetzung eingeblasen wird, oder dass es durch Unterdruck in einer Mischapparatur in die Zusammensetzung eingesaugt wird.

Ein derartiges bevorzugtes Verfahren ist beispielsweise beschrieben in DE 10 2005 042 380 A1.

Ein zweites Verfahren zur Herstellung eines hitzehärtenden Schaums besteht darin, einer hitzehärtenden Zusammensetzung **Z,** welche unter Druck steht, ein Gas, das in flüssigem oder überkritischem Zustand vorliegt, zu injizieren und mit Hilfe eine Mischvorrichtung in die Zusammensetzung einzumischen und zu verteilen. Bei der anschliessenden Druckentspannung der Zusammensetzung auf Atmosphärendruck expandiert das Gas und es entsteht ein Schaum.

Ein wesentlicher Punkt bei allen zwei Verfahren zur Herstellung des hitzehärtenden Schaums ist, dass die Zusammensetzung **Z** vor der Applikation geschäumt wird, das heisst, dass zum Zeitpunkt der Applikation der Schäumungsvorgang weitgehend abgeschlossen ist. Nur so kann gewährleistet werden, dass die Zusammensetzung präzise aufgetragen werden kann und dass bei der Anwendung des hitzehärtenden Schaums als Klebstoff keine Verschiebung der zu verklebenden Substrate durch den Schäumungsvorgang während der Aushärtung unter Temperatureinfluss stattfindet.

Da es sich bei der zu schäumenden Zusammensetzung um eine hitzehärtende Zusammensetzung **Z** handelt, ist darauf zu achten, dass die Schäumung, unabhängig davon nach welchem Verfahren sie durchgeführt wird, bei Temperaturen durchgeführt wird, welche unterhalb der Aushärtungstemperatur der Zusammensetzung liegen. Vorzugsweise ist die Schäumungstemperatur ≤ 100°C, insbesondere 20 bis 80 °C, bevorzugt 20 bis 60 °C.

Sowohl die hitzehärtende Zusammensetzung **Z** als auch der daraus erhältliche hitzehärtende Schaum ist bei Raumtemperatur lagerstabil, das heisst, sie können in einer geeigneten Verpackung oder Anordnung, wie beispielsweise einem Fass, einem Beutel oder einer Kartusche, über einen Zeitraum von mehreren Monaten bis zu einem Jahr und länger aufbewahrt werden, ohne dass sie sich durch chemische Reaktionen in ihren Anwendungseigenschaften oder in ihren Eigenschaften nach der Aushärtung in einem für ihren Gebrauch relevanten Ausmass verändern.

Weiterhin umfasst die vorliegende Erfindung die Verwendung eines vorhergehend beschriebenen hitzehärtenden Schaums als Klebstoff, Dichtstoff oder zur Herstellung von Beschichtungen sowie zum Ausschäumen von Hohlstrukturen. Dabei kann der hitzehärtende Schaum als ein- oder mehrkomponentiges System für eine breite Anzahl von Einsatzmöglichkeiten verwendet werden.

Insbesondere geeignet ist der erfindungsgemässe hitzehärtende Schaum als hitzehärtender Klebstoff für strukturelle Verklebungen oder zur Unterfütterung im Fahrzeugbau.

Solche Klebstoffe werden für das Verkleben und Unterfüttern von hitzestabilen Materialien benötigt.

Unter hitzestabilen Materialien werden Materialien verstanden, welche bei einer Aushärtetemperatur von 100 bis 220 °C, vorzugsweise 120 bis 200°C zumindest während der Aushärtezeit formstabil sind. Insbesondere handelt es sich hierbei um Metalle und Kunststoffe wie ABS (= Acrylonitril-Butadien-Styrol), Polyamid, Polyphenylenether, Verbundmaterialien wie SMC (= Sheet Molding Compound), ungesättigte Polyester GFK (= glasfaserverstärkte Kunststoffe), Epoxid- oder Acrylatverbundwerkstoffe. Bevorzugt ist die Anwendung, bei der zumindest ein Material ein Metall ist. Als besonders bevorzugte Verwendung gilt das Verkleben von gleichen oder verschiedenen Metallen, insbesondere im Rohbau in der Automobilindustrie. Die bevorzugten Metalle sind vor allem Stahl, insbesondere elektrolytisch verzinkter, feuerverzinkter, beölter Stahl, Bonazink-beschichteter Stahl, und nachträglich phosphatierter Stahl, sowie Aluminium insbesondere in den im Autobau typischerweise vorkommenden Varianten.

Ebenfalls bevorzugt ist die Verwendung des hitzehärtenden Schaums als hitzehärtender Dichtstoff, insbesondere zur Abdichtung von Falzverbindungen und Nähten.

Mit einem hitzehärtenden Schaum basierend auf einer erfindungsgemässen Zusammensetzung **Z** ist es möglich, die Technologie der crashfesten Strukturklebstoffe für Unterfütterungen und Dichtungen verfügbar zu machen und somit auch dort optimale Haftresultate zu erzielen.

Weiterhin ist es möglich über unterschiedliche Schäumungsgrade die Festigkeit des resultierenden hitzegehärteten Schaums zu variieren. Dadurch können aus der gleichen hitzehärtenden Zusammensetzung **Z,** hitzehärtende Schäume mit verschiedenen Gasanteilen für unterschiedliche Zwecke eingesetzt werden. Unter Verwendung einer geeigneten Schäumungs- und Mischanlage, welche unmittelbar vor der Applikationsanlage des hitzehärtenden Schaums eingesetzt wird, ist es auch möglich, den Schäumungsgrad während der Applikation sehr kurzfristig zu verändern.

Mit einem Klebstoff, Dichtstoff oder mit einer Beschichtung basierend auf einem erfindungsgemässen hitzehärtenden Schaum ist es möglich, die gewünschte Kombination von hoher Festigkeit bei bedeutend geringerem Materialaufwand zu erreichen.

Weiterhin umfasst die vorliegende Erfindung ein Verfahren zum Verkleben von Substraten **S1** und **S2** umfassend die Schritte
c1) Applizieren eines hitzehärtenden Schaums gemäss vorhergehender Beschreibung auf ein Substrat **S1;**
c2) Kontaktieren der applizierten Zusammensetzung mit einem zweiten Substrat **S2;**
   oder
d1) Applizieren eines hitzehärtenden Schaums gemäss vorhergehender Beschreibung auf die Substrate **S1** und **S2;**
d2) Fügen der beiden mit Schaum applizierten Substrate **S1** und **S2.**

Das Substrat **S1** besteht dabei aus einem gleichen oder einem unterschiedlichen hitzestabilen Material wie das Substrat **S2.**

Die vorliegende Erfindung umfasst auch ein Verfahren zum Abdichten eines Substrats **S1** und/oder **S2** umfassend die Schritte
e1) Applizieren eines hitzehärtenden Schaums gemäss vorhergehender Beschreibung auf ein Substrat **S1** und/oder ein Substrat **S2;**
   oder
f1) Applizieren eines hitzehärtenden Schaums gemäss vorhergehender Beschreibung zwischen die Oberflächen der Substrate S1 und **S2;**

Das Substrat **S1** besteht dabei aus einem gleichen oder einem unterschiedlichen hitzestabilen Material wie das Substrat **S2.**

Die vorliegende Erfindung umfasst weiterhin ein Verfahren zum Ausschäumen von Hohlstrukturen, umfassend den Schritt
g1) Injizieren eines hitzehärtenden Schaums in eine vorhandene Hohlstruktur.

Dabei kann der hitzegehärtete Schaum als Dichtung und/oder zur Schalldämmung und/oder zur strukturellen Verstärkung der Hohlstruktur, beispielsweise eines strukturellen Bauteils, eingesetzt werden.

Ebenfalls umfasst die vorliegende Erfindung ein Verfahren zur Herstellung einer Beschichtung oder zur Versiegelung eines Substrats **S1** umfassend die Schritte
h1) Applizieren eines hitzehärtenden Schaums gemäss vorhergehender Beschreibung auf ein Substrat **S1;**

Sowohl nach den Schritten c2) und d2) des Verklebens als auch nach den Schritten e1) und f1) des Abdichtens, nach dem Schritt g1) des Ausschäumen von Hohlstrukturen und nach dem Schritt h1) des Beschichtens erfolgt ein oder mehrere Schritte des Aushärtens bei Temperaturen von 100 bis 220 °C, insbesondere bei Temperaturen von 120 bis 200 °C.

Ein weiterer Bestandteil der Erfindung ist, dass in den vorhergehend beschriebenen Verfahren der Schäumungsgrad der Zusammensetzung **Z** und dadurch der Gasgehalt des erfindungsgemässen hitzehärtenden Schaums während der Applikation des Schaums variiert werden kann. Eine geeignete Schäumungs- und Applikationsanlage kann von einem Computer mittels geeigneter Software angesteuert werden um den Schäumungsgrad einzustellen. Ein Vorteil der Variation des Schäumungsgrads während der Applikation ist, dass Schäume mit unterschiedlichen Eigenschaften aus dem gleichen Applikationsgerät, vorzugsweise ohne absetzen, appliziert werden können.

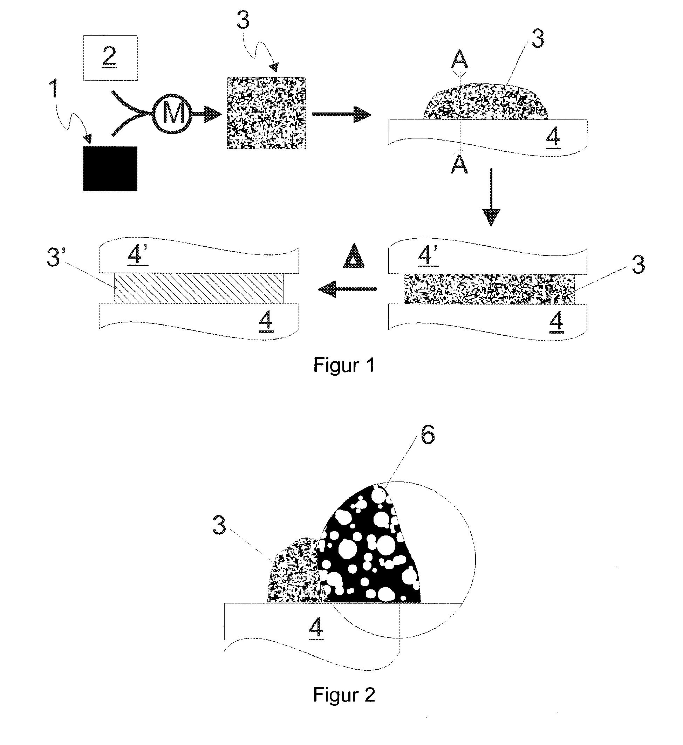

Figur 1 zeigt schematisch ein Verfahren der Herstellung, der Applikation und der Aushärtung eines erfindungsgemässen hitzehärtenden Schaums. Ein derartiges Verfahren wird beispielsweise für die Verklebung zweier Substrate an der Fertigungslinie angewendet. Die Zusammensetzung **Z** 1 wird dabei zusammen mit einem Gas aus einem Gasbehälter 2 in eine Mischapparatur M geführt, wo die Zusammensetzung **Z** 1 und das Gas miteinander vermischt werden. Der daraus entstehende hitzehärtende Schaum 3 wird unmittelbar aus der Mischapparatur M mittels Applikationsgerät oder von Hand auf ein Substrat 4 aufgetragen. Anschliessend wird das Substrat 4 mit einem zweiten Substrat 4' über dem hitzehärtenden Schaum gefügt. Das Fügeteil wird danach auf die Aushärtungstemperatur des hitzehärtenden Schaums erwärmt, wobei der hitzehärtende Schaum 3 zu einem hitzegehärteten Schaum 3' aushärtet.

Der Vorteil eines solchen Verfahrens, bei welchem die Schritte der Herstellung und der Applikation des Schaums unmittelbar nacheinander stattfinden, liegt darin, dass der Gasgehalt im hitzehärtenden Schaum sehr kurzfristig variiert werden kann. Somit können hitzehärtende Schäume aus derselben Zusammensetzung **Z** hergestellt werden, welche aufgrund ihres unterschiedlichen Gasgehalts unterschiedliche Eigenschaften aufweisen. Die Applikation dieser hitzehärtenden Schäume kann durch ein solches Verfahren ohne Absetzen des Applikationsgeräts an einem Stück erfolgen.

Figur 2 zeigt schematisch eine Raupe aus einem hitzehärtenden Schaum 3 auf einem Substrat 4, wobei ein Ausschnitt (im Kreis) vergrössert dargestellt ist. Das Gas befindet sich dabei in Zellen bzw. Poren 6, welche gleichmässig in der Zusammensetzung **Z** verteilt sind.

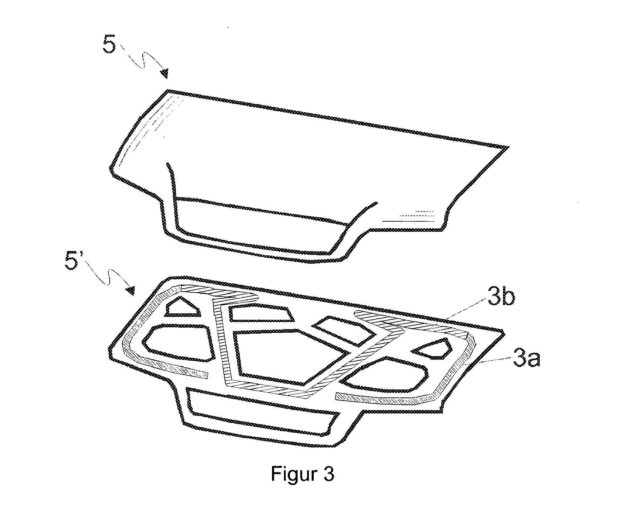

Figur 3 zeigt schematisch eine Motorhaube eines Automobils, bestehend aus einem Aussenblech 5 und einem darunter liegenden rippenförmigen Innenblech 5' zur Versteifung, vor der Verklebung. Auf dem Stahlgerüst 5' wird als Klebstoff ein hitzehärtender Schaum aus einem Applikationsgerät appliziert, ohne dass dieses abgesetzt wird. Je nach Stelle der Verklebung wird ein Schaum mit einem unterschiedlichen Gasgehalt appliziert. An jenen Stellen, welche eine besonders hohe Festigkeit erfordern und grossen mechanischen Belastungen standhalten müssen, wird vorzugsweise ein hitzehärtender Schaum 3a mit einem geringen Gasgehalt, d. h. mit einem Gasgehalt von 10 bis 50 Vol.-%, appliziert. An Stellen, wo der hitzehärtende Schaum nur begrenzte strukturelle Eigenschaften aufweisen soll, beispielsweise im inneren Bereich der Motorhaube, wo der hitzehärtende Schaum als reiner Unterfütterungsklebstoff appliziert wird, wird ein hitzehärtender Schaum 3b mit einem hohen Gasgehalt, d. h. mit einem Gasgehalt von 30 bis 80 Vol.-%, eingesetzt. Durch die Änderung Mischverhältnisses der Zusammensetzung **Z** und des Gases während des Herstellungs- und Applikationsverfahrens, ist es möglich, hitzehärtende Schäume mit einem niedrigen Gasgehalt 3a und solche mit einem hohen Gasgehalt 3b ohne Absetzen aus der gleichen Apparatur am Stück zu applizieren.

Weiterhin umfasst die Erfindung einen hitzegehärteten Schaum, welcher durch einen Schritt des Aushärtens eines hitzehärtenden Schaums, wie er vorhergehend beschrieben ist, erhalten wird.

Vorzugsweise ist das Gas im hitzegehärteten Schaum in Poren eingeschlossen, welche einen Durchmessers ≤ 1 mm, insbesondere ≤ 0.5 mm, bevorzugt ≤ 0.1 mm, aufweisen und homogen in der Zusammensetzung verteilt sind.

Weiterhin umfasst die vorliegende Erfindung einen, aus derartigen Verfahren zum Verkleben, Abdichten oder Beschichten resultierenden Artikel. Ein solcher Artikel ist vorzugsweise ein Fahrzeug oder ein Anbauteil eines Fahrzeugs, insbesondere ein Automobil.

Ferner eignet sich der erfindungsgemässe hitzehärtende Schaum nicht nur für den Automobilbau sondern auch für andere Anwendungsgebiete. Besonders zu erwähnen sind verwandte Anwendungen im Transportmittelbau wie Schiffe, Lastwagen, Busse oder Schienenfahrzeuge oder im Bau von Gebrauchsgütern wie beispielsweise Waschmaschinen.

### Beispiele

### Herstellung eines hitzehärtenden Schaums

Es wurden 300 g des Klebstoffs SikaPower^{®} 419E1, der kommerziell erhältlich ist von der Sika Automotive GmbH, Deutschland, in eine Metalldose eingewogen und in einem Dissolver mit einer Rührgeschwindigkeit von 2500 Umdrehungen pro Minute und einem Scheibendurchmesser von 8 cm während 7 Minuten unter Auf- und Ab-Bewegungen der Dose gerührt. Gleichzeitig wurde über eine Druckleitung mit einem Druck von 3 bar Pressluft in den Klebstoff eingeblasen. Bei gleich bleibender Masse verringerte sich die Dichte dabei von 1.28 kg/m³ zu 1.14 kg/m³ was einer Volumenzunahme von etwa 12 % entspricht. Somit wurde ein hitzehärtender Schaum mit einem Luftanteil von 12 Vol.-% hergestellt.

### Versuche

Der hitzehärtende Schaum, der wie vorhergehend beschrieben hergestellt wurde, wurde von Hand mit einem Spatel auf ein verzinktes Stahlblech, wie es im Automobilbau üblicherweise verwendet wird, appliziert. Als Referenzbeispiel wurde unmittelbar daneben auf die gleiche Weise der ungeschäumte Klebstoff appliziert. Anschliessend wurde der Prüfkörper im Ofen bei 175 °C während 35 Minuten ausgehärtet.

Analog wurde je ein Klebeverbundkörper aus zwei verzinkten Stahlblechen und dem beschriebenen hitzehärtenden Schaum bzw. dem ungeschäumten Klebstoff hergestellt, welcher nach dem Fügen im Ofen bei 175 °C während 35 Minuten ausgehärtet wurde.

### Resultate

Der erfindungsgemässe Schaum wies eine sehr gute Haftung auf dem Substrat auf. Weiterhin wurde durch Aufschneiden des hitzegehärteten Schaums festgestellt, dass die luftgefüllten Poren des Schaums sehr gleichmässig im Schaum verteilt sind.

Die beiden hergestellten Klebeverbundkörper zeigten beim Keiltest sehr gute Haftung.

### Kurze Beschreibung der Zeichnungen

Im Folgenden werden anhand der Zeichnungen Ausführungsbeispiele der Erfindung näher erläutert. Gleiche oder gleich wirkende Elemente sind in den verschiedenen Figuren mit den gleichen Bezugszeichen versehen. Selbstverständlich ist die Erfindung nicht auf gezeigte und beschriebene Ausführungsbeispiele beschränkt.

Es zeigen:
- Figur 1: schematisch ein Verfahren der Herstellung, der Applikation und der Aushärtung eines erfindungsgemässen hitzehärtenden Schaums;
- Figur 2: schematisch einen Querschnitt durch eine Raupe aus einem hitzehärtenden Schaum 3, bzw. entlang der Linie A - A in Figur 1;
- Figur 3: eine schematische Darstellung einer Motorhaube eines Automobils, bestehend aus einem Stahlblech 5 und einem darunter liegenden Stahlgerüst 5', vor der Verklebung.

In den Figuren sind nur die für das unmittelbare Verständnis der Erfindung wesentlichen elemente gezeigt.

### Bezugszeichenliste

- 1: Zusammensetzung **Z**
- 2: Gasbehälter
- 3: hitzehärtender Schaum
- 3a: hitzehärtender Schaum mit einem geringen Gasgehalt
- 3b: hitzehärtender Schaum mit einem hohen Gasgehalt
- 3': hitzegehärteter Schaum
- 4: Fügeteil/Substrat S1
- 4': Fügeteil/Substrat S2
- 5: Motorhaube/Aussenblech
- 5': Motorhaube/Innenblech
- 6: Zellen/Poren

## Patentansprüche

1. Hitzehärtender Schaum bestehend aus
a) 10 bis 80 Vol.-% mindestens eines Gases; und
b) einer hitzehärtenden Zusammensetzung **Z** enthaltend
b1) mindestens ein Polyurethanpolymer der Formel (I) 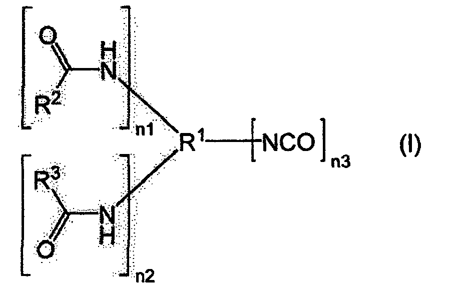 wobei
R¹ für ein mit n1+n2+n3 Isocyanatgruppen terminierte lineares oder verzweigtes Polyurethanpolymer **PU1** nach dem Entfernen aller endständigen Isocyanatgruppen steht;
R² unabhängig voneinander für eine Blockierungsgruppe, welche sich bei einer Temperatur über 100°C abspaltet, oder für eine Gruppe der Formel (II) steht; 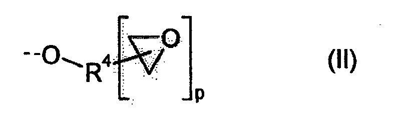 R³ unabhängig voneinander für eine Blockierungsgruppe, welche sich bei einer Temperatur über 100°C abspaltet, oder für eine Gruppe der Formel (II') steht; 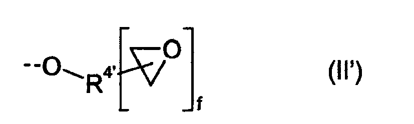 wobei R⁴ und R^{4'} je für einen aliphatischen, cycloaliphatischen, aromatischen oder arylaliphatischen (p+1)- bzw. (f+1)-wertigen Kohlenwasserstoffrest, welcher gegebenenfalls Heteroatome enthält, steht;
p = 1, 2 oder 3 und f = 1, 2 oder 3 ist;
n1, n2 und n3 je für Werte zwischen 0 und 7 stehen mit der Massgabe,
dass 2 ≤ (n1+n2+n3) 5 8 ist;
b2) mindestens einen Härter **B,** welcher durch erhöhte Temperatur aktiviert wird;
**dadurch gekennzeichnet, dass** die hitzehärtende Zusammensetzung **Z** zusätzlich mindestens ein Epoxidharz **A** umfasst, welches durchschnittlich mehr als eine Epoxidgruppe pro Molekül aufweist, und
dass der hitzehärtende Schaum bei Raumtemperatur lagerstabil ist.

2. Hitzehärtender Schaum gemäss Anspruch 1, **dadurch gekennzeichnet, dass** die hitzehärtende Zusammensetzung **Z** frei von chemischen Treibmitteln ist.

3. Hitzehärtender Schaum gemäss einem der vorhergehenden Ansprüche, **dadurch gekennzeichnet, dass**
R² für einen Rest der Formel (II) steht; und
R³ für einen Rest der Formel (II') steht.

4. Hitzehärtender Schaum gemäss einem der vorhergehenden Ansprüche, **dadurch gekennzeichnet, dass** der Anteil des Epoxidharzes **A** 2 bis 80 Gew.-%, insbesondere 5 bis 70 Gew.-%, bevorzugt 7 bis 60 Gew.-%, bezogen auf das Gesamtgewicht des Schaums, beträgt.

5. Hitzehärtender Schaum gemäss einem der vorhergehenden Ansprüche, **dadurch gekennzeichnet, dass** der Anteil des Polyurethanpolymers der Formel (I) 5 bis 50 Gew.-%, insbesondere 10 bis 40 Gew.-%, bevorzugt 15 bis 35 Gew.-%, bezogen auf das Gesamtgewicht des Schaums, beträgt.

6. Hitzehärtender Schaum gemäss einem der vorhergehenden Ansprüche, **dadurch gekennzeichnet, dass** der Anteil des Härters **B** 0.5 bis 8 Gew.-%, insbesondere 1 bis 6 Gew.-%, bevorzugt 2.5 bis 5 Gew.-%, bezogen auf das Gesamtgewicht des Schaums, beträgt.

7. Hitzehärtender Schaum gemäss einem der vorhergehenden Ansprüche, **dadurch gekennzeichnet, dass** der Schaum zusätzlich mindestens einen Füllstoff enthält, insbesondere in einer Menge von 1 bis 50 Gew.-%, insbesondere 5 bis 40 Gew.-%, bevorzugt 10 bis 35 Gew.-%, bezogen auf das Gesamtgewicht des Schaums, beträgt.

8. Verfahren zur Herstellung eines hitzehärtenden Schaums gemäss einem der Ansprüche 1 bis 7, **dadurch gekennzeichnet,**
- **dass** der hitzehärtenden Zusammensetzung **Z** bei Temperaturen von 20 bis 80°C, insbesondere 20 bis 60 °C, und Atmosphärendruck das Gas zugeführt wird und mit Hilfe einer Mischvorrichtung in die Zusammensetzung eingemischt und verteilt wird;
oder
- **dass** der hitzehärtenden Zusammensetzung **Z,** welche unter Druck steht, das Gas, das in flüssigem oder überkritischem Zustand vorliegt, injiziert wird, mit Hilfe einer Mischvorrichtung in die Zusammensetzung **Z** eingemischt und verteilt wird und bei der anschliessenden Druckentspannung der Zusammensetzung expandiert, sodass der Schaum entsteht.

9. Verwendung eines hitzehärtenden Schaums gemäss einem der Ansprüche 1 bis 7 als Klebstoff, Dichtstoff, zur Herstellung von Beschichtungen oder zum Ausschäumen von Hohlstrukturen.

10. Verwendung gemäss Anspruch 9 als hitzehärtender Klebstoff, insbesondere für strukturelle Verklebungen oder zur Unterfütterung im Fahrzeugbau.

11. Verfahren zum Verkleben von Substraten **S1** und **S2** umfassend die Schritte
c1) Applizieren eines hitzehärtenden Schaums gemäss einem der Ansprüche 1 bis 7 auf ein Substrat **S1;**
c2) Kontaktieren des applizierten hitzehärtenden Schaums mit einem zweiten Substrat **S2;**
oder
d1) Applizieren eines hitzehärtenden Schaums gemäss einem der Ansprüche 1 bis 7 auf die Substrate **S1** und **S2;**
d2) Fügen der beiden mit Schaum beschichteten Substrate **S1** und **S2;**
wobei das Substrat **S1** aus einem gleichen oder einem unterschiedlichen hitzestabilen Material wie das Substrat **S2** besteht; und
wobei nach dem Schritt c2) bzw. nach dem Schritt d2) ein oder mehrere Schritte des Aushärtens bei Temperaturen von 100 bis 220 °C, insbesondere bei Temperaturen von 120 bis 200 °C, erfolgt.

12. Verfahren zum Abdichten eines Substrats **S1** und/oder **S2** umfassend die Schritte
e1) Applizieren eines hitzehärtenden Schaums gemäss einem der Ansprüche 1 bis 7 auf ein Substrat **S1** und/oder ein Substrat **S2;**
oder
f1) Applizieren eines hitzehärtenden Schaums gemäss einem der Ansprüche 1 bis 7 zwischen die Oberflächen der Substrate **S1** und **S2;**
wobei das Substrat **S1** aus einem gleichen oder einem unterschiedlichen hitzestabilen Material wie das Substrat **S2** besteht; und
wobei nach dem Schritt e1) bzw. nach dem Schritt f1) ein oder mehrere Schritte des Aushärtens bei Temperaturen von 100 bis 220 °C, insbesondere bei Temperaturen von 120 bis 200 °C, erfolgt.

13. Verfahren gemäss einem der Ansprüche 11 oder 12, **dadurch gekennzeichnet, dass** der Schäumungsgrad der Zusammensetzung **Z** und dadurch der Gasgehalt des hitzehärtenden Schaums gemäss einem der Ansprüche 1 bis 7 während der Applikation des Schaums variiert werden kann.

14. Hitzegehärteter Schaum, **dadurch gekennzeichnet, dass** er aus einem hitzehärtenden Schaum gemäss einem der Ansprüche 1 bis 7 erhalten wird.

## Claims

1. A heat-curing foam consisting of
a) from 10 to 80% by volume of at least one gas; and
b) a heat-curing composition **Z** containing
b1) at least one polyurethane polymer of the formula (I) 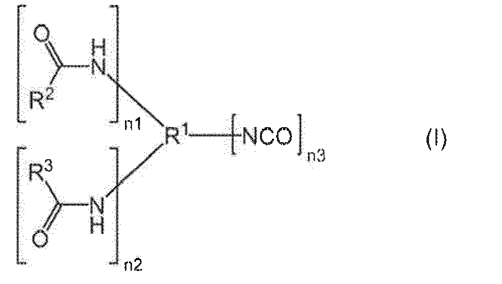 where
R¹ is a linear or branched polyurethane polymer **PU1** terminated by n1+n2+n3 isocyanate groups after removal of all terminal isocyanate groups;
the radicals R² are each, independently of one another, a blocking group which is eliminated at a temperature abode 100°C or a group of the formula (II); 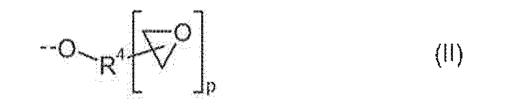 the radicals R³ are each, independently of one another, a blocking group which is eliminated at a temperature above 100°C or a group of the formula (II'); 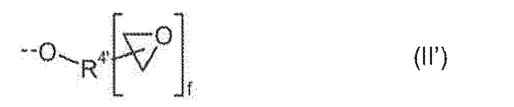 where R⁴ and R^{4'} are each an aliphatic, cycloaliphatic, aromatic or arylaliphatic (p+1)- or (f+1)-valent hydrocarbon radical which may contain heteroatoms;
p = 1, 2 or 3 and f = 1, 2 or 3;
n1, n2 and n3 are each in the range from 0 to 7, with the proviso that
2 ≤ (n1+n2+n3) ≤ 8;
b2) at least one hardener **B** which is activated by elevated temperature;
**characterized in that** the heat-curing composition **Z** additionally comprises at least one epoxy resin **A** which has an average of more than one epoxide group per molecule, and
**in that** the heat-curing foam is storage-stable at room temperature.

2. The heat-curing foam as claimed in claim 1, **characterized in that** the heat-curing composition **Z** is free of chemical blowing agents.

3. The heat-curing foam as claimed in any of the preceding claims, **characterized in that**
R² is a radical of the formula (II); and
R³ is a radical of the formula (II').

4. The heat-curing foam as claimed in any of the preceding claims, **characterized in that** the proportion of the epoxy resin **A** is from 2 to 80% by weight, in particular from 5 to 70% by weight, preferably from 7 to 60% by weight, based on the total weight of the foam.

5. The heat-curing foam as claimed in any of the preceding claims, **characterized in that** the proportion of the polyurethane polymer of the formula (I) is from 5 to 50% by weight, in particular from 10 to 40% by weight, preferably from 15 to 35% by weight, based on the total weight of the foam.

6. The heat-curing foam as claimed in any of the preceding claims, **characterized in that** the proportion of the hardener **B** is from 0.5 to 8% by weight, in particular from 1 to 6% by weight, preferably from 2.5 to 5% by weight, based on the total weight of the foam.

7. The heat-curing foam as claimed in any of the preceding claims, **characterized in that** the foam additionally contains at least one filler, in particular in an amount of from 1 to 50% by weight, in particular from 5 to 40% by weight, preferably from 10 to 35% by weight, based on the total weight of the foam.

8. A process for producing a heat-curing foam as claimed in any of claims 1 to 7, **characterized**
- **in that** the gas is introduced into the heat-curing composition **Z** at temperatures of from 20 to 80°C, in particular from 20 to 60°C, and atmospheric pressure and is mixed into and distributed in the composition by means of a mixing apparatus;
or
- **in that** the gas which is present in the liquid or supercritical state is injected into the heat-curing composition **Z** which is under pressure, mixed into and distributed in the composition **Z** by means of a mixing apparatus and expands on subsequent depressurization of the composition so that the foam is formed.

9. The use of a heat-curing foam as claimed in any of claims 1 to 7 as adhesive, sealant, for producing coatings or for filling hollow structures with foam.

10. The use as claimed in claim 9 as heat-curing adhesive, in particular for structural adhesive bonds or for interfacing in vehicle construction.

11. A process for adhesively bonding substrates **S1** and **S2**, which comprises the steps
c1) application of a heat-curing foam as claimed in any of claims 1 to 7 to a substrate **S1**;
c2) contacting of the applied heat-curing foam with a second substrate **S2**;
or
d1) application of a heat-curing foam as claimed in any of claims 1 to 7 to the substrates **S1** and **S2**;
d2) joining of the two substrates S1 and S2 with applied foam;
where the substrate **S1** consists of an identical or different heat-stable material as the substrate **S2**; and step c2) or step d2) is followed by one or more curing steps at temperatures of from 100 to 220°C, in particular at temperatures of from 120 to 200°C.

12. A process for sealing a substrate **S1** and/or **S2**, which comprises the steps
e1) application of a heat-curing foam as claimed in any of claims 1 to 7 to a substrate **S1** and/or a substrate **S2**;
or
f1) application of a heat-curing foam as claimed in any of claims 1 to 7 between the surfaces of the substrates **S1** and **S2**;
where the substrate **S1** consists of an identical or different heat-stable material as the substrate **S2**;and step e1) or step f1) is followed by one or more curing steps at temperatures of from 100 to 220°C, in particular at temperatures of from 120 to 200°C.

13. The process as claimed in claim 11 or 12, **characterized in that** the degree of foaming of the composition **Z** and thus the gas content of the heat-curing foam as claimed in any of claims 1 to 7 can be varied during application of the foam.

14. A heat-cured foam, **characterized in that** it is obtained from a heat-curing foam as claimed in any of claims 1 to 7.

## Revendications

1. Mousse thermodurcissable constituée de :
a) 10 à 80 % en volume d'au moins un gaz ; et
b) un composé thermodurcissable **Z** contenant :
b1) au moins un polymère de polyuréthane de formule (I) 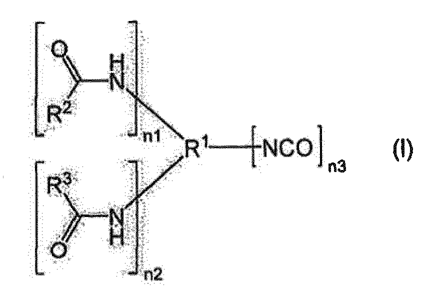 R¹ étant un polymère de polyuréthane, linéaire ou ramifié, terminé par n1+n2+n3 groupes isocyanates **PU1** après élimination de tous les groupes isocyanates en fin de chaîne ;
R² étant, indépendamment, un groupe de blocage qui se divise à une température supérieure à 100 °C ou un groupe de formule (II) 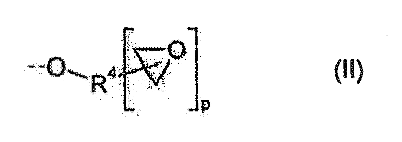 R³ étant, indépendamment, un groupe de blocage qui se divise à une température supérieure à 100 °C ou un groupe de formule (II') 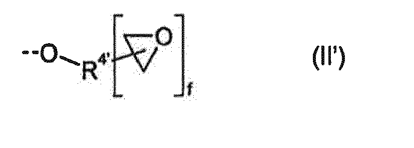 R⁴ et R^{4'} étant chacun un radical d'hydrocarbure aliphatique, cycloaliphatique, aromatique ou arylaliphatique, de valeur (p+1) respectivement (f+1), qui contient éventuellement des hétéroatomes ;
p = 1, 2 ou 3 et f = 1, 2 ou 3 ;
n1, n2 et n3 étant des valeurs comprises entre 0 et 7 avec la condition 2 ≤ (n1+n2+n3) ≤ 8 ;
b2) au moins un durcisseur **B** qui est activé par une température accrue ;
**caractérisée en ce que** le composé thermodurcissable **Z** comprend en outre au moins une résine époxy **A** qui comporte en moyenne plus d'un groupe époxy par molécule et **en ce que** la mousse thermodurcissable est stable au stockage à température ambiante.

2. Mousse thermodurcissable selon la revendication 1, **caractérisée en ce que** le composé thermodurcissable **Z** est exempt d'agent moussant chimique.

3. Mousse thermodurcissable selon l'une des revendications précédentes, **caractérisé en ce que**
R² est un radical de la formule (II) ; et
R³ est un radical de la formule (II').

4. Mousse thermodurcissable selon l'une des revendications précédentes, **caractérisée en ce que** la proportion de la résine époxy **A** est de 2 à 80 % en poids, notamment de 5 à 70 % en poids, de préférence de 7 à 60 % en poids, par rapport au poids total de la mousse.

5. Mousse thermodurcissable selon l'une des revendications précédentes, **caractérisée en ce que** la proportion du polymère de polyuréthane de la formule (I) est de 5 à 50 % en poids, notamment de 10 à 40 % en poids, de préférence de 15 à 35 % en poids, par rapport au poids total de la mousse.

6. Mousse thermodurcissable selon l'une des revendications précédentes, **caractérisée en ce que** la proportion du durcisseur **B** est de 0,5 à 8 % en poids, notamment de 1 à 6 % en poids, de préférence de 2,5 à 5 % en poids, par rapport au poids total de la mousse.

7. Mousse thermodurcissable selon l'une des revendications précédentes, **caractérisée en ce que** la mousse contient en outre au moins une matière de remplissage, notamment dans une proportion de 1 à 50 % en poids, notamment de 5 à 40 % en poids, de préférence de 10 à 35 % en poids, par rapport au poids total de la mousse.

8. Procédé de fabrication d'une mousse thermodurcissable selon l'une des revendications 1 à 7, **caractérisé en ce que**
- on amène le gaz au composé thermodurcissable **Z** à des températures allant de 20 à 80 °C, notamment de 20 à 60 °C, et à la pression atmosphérique, on le mélange et répartit dans le composé à l'aide d'un dispositif mélangeur ;
ou
- on injecte le gaz, qui est présent à l'état liquide ou supercritique, dans le composé thermodurcissable **Z**, qui est sous pression, on le mélange et répartit dans le composé **Z** à l'aide d'un dispositif mélangeur et, avec la détente consécutive du composé, il se produit une telle expansion que la mousse se forme.

9. Utilisation d'une mousse thermodurcissable selon l'une des revendications 1 à 7 comme produit adhésif, produit d'étanchéité, pour la fabrication de revêtements ou pour le moussage de structures creuses.

10. Utilisation selon la revendication 9 comme adhésif thermodurcissable, notamment pour des collages structurels ou pour le garnissage en construction automobile.

11. Procédé de collage de substrats **S1** et **S2** comprenant les étapes :
c1) application d'une mousse thermodurcissable selon l'une des revendications 1 à 7 sur un substrat **S1** ;
c2) mise en contact de la mousse thermodurcissable appliquée avec un second substrat **S2 ;**
ou
d1) application d'une mousse thermodurcissable selon l'une des revendications 1 à 7 sur les substrats **S1** et **S2 ;**
d2) assemblage des deux substrats **S1** et **S2** enduits de mousse ;
le substrat **S1** et le substrat **S2** étant en une matière identique ou en une matière différente stable à la chaleur ; et
après l'étape c2) ou après l'étape d2), une ou plusieurs étapes de durcissement étant réalisée à des températures allant de 100 à 220 °C, notamment à des températures allant de 120 à 200 °C.

12. Procédé d'étanchéification d'un substrat **S1** et/ou **S2** comprenant les étapes :
e1) application d'une mousse thermodurcissable selon l'une des revendications 1 à 7 sur un substrat **S1** et/ou sur un substrat **S2 ;** ou
f1) application d'une mousse thermodurcissable selon l'une des revendications 1 à 7 entre les surfaces des substrats **S1** et **S2 ;**
le substrat **S1** et le substrat **S2** étant en une matière identique ou en une matière différente stable à la chaleur ; et
après l'étape e1) ou après l'étape f1), une ou plusieurs étapes de durcissement étant réalisée à des températures allant de 100 à 220 °C, notamment à des températures allant de 120 à 200 °C.

13. Procédé selon l'une des revendications 11 ou 12, **caractérisé en ce que** le degré de moussage du composé Z et donc la teneur en gaz de la mousse thermodurcissable selon l'une des revendications 1 à 7 pendant l'application de la mousse peuvent être modifiés.

14. Mousse durcie à la chaleur, **caractérisée en ce qu'**elle a été obtenue à partir d'une mousse thermodurcissable selon l'une des revendications 1 à 7.
